# EUROPEAN PATENT APPLICATION

(11) **EP 1 628 002 A2**
(43) Date of publication of application: **22.02.2006**
(21) Application number: 05017999.3
(22) Date of filing: 18.08.2005
(51) Int. Cl.: F02B 27/02, F02D 13/02

(54) **Intake system for multi-cylinder engine**

(30) Priority: 19.08.2004 JP 2004239830; 19.08.2004 JP 2004239753
(71) Applicant: Mazda Motor Corporation, Aki-gun, Hiroshima 730-8670 (JP)
(72) Inventor: Hitomi, Mitsuo, Aki-gun Hiroshima (JP); Iwata, Noriyuki, Aki-gun Hiroshima (JP); Inatomi, Hiroshi, Boston, MA 02116 (US)
(74) Representative: Müller-Boré & Partner Patentanwälte

(57) **Abstract**

Disclosed is an intake system for a multi-cylinder engine, which comprises an impulse charging device adapted to have a valve function in association with an intake stroke in each of cylinders and at least in a term from the middle of an intake stroke to a compression stroke in the engine so as to generate a high pressure wave in each of the cylinders, engine-speed detection means for detecting an engine speed of the multi-cylinder engine, and valve timing control means operable to control an open timing of the impulse charging device and a valve-open timing of the valuable valve timing system, in accordance with a detection value of the engine-speed detection means, in such a manner as to advance the open timing of the impulse charging device and delay the open timing of each of the intake valves, as the multi-cylinder engine is operated in an higher engine-speed range.

## Description

The present invention relates to an intake system for a multi-cylinder engine, and more particularly to a multi-cylinder engine intake system having an impulse charging device adapted to generate a high pressure wave in cylinders.

In a multi-cylinder engine intake system which includes a surge tank and an intake manifold having a plurality of branch pipes each branched from the surge tank and connected to a corresponding one of respective intake ports of a plurality of cylinders, various techniques for providing higher volumetric efficiency have been developed.

For example, the following Patent Publication 1 discloses a technique of preparing a plurality of intake passages having different lengths with respect to each intake port, and selectively providing fluid communication between each of the intake passages and a surge tank through a selector valve.

Further, the following Non-Patent Publication 1 discloses a technique for increasing a torque in a low engine-speed range by means of an impulse wave. The Non-Patent Publication 1 discloses a mechanism having a solenoid valve interposed in each branch pipe of an intake manifold and provided with a valve element to be moved along a flow path of the branch pipe. The solenoid valve is operable to close the branch pipe until the middle of an intake stroke to create a negative pressure, and open the branch pipe around the bottom dead center of the intake stroke to allow intake air to be rapidly supplied into a cylinder.

As an impulse charging device, the following Non-Patent Publication 2 discloses a system for generating a pressure pulse using a flap valve.

[Patent Publication 1] Japanese Patent Laid-Open Publication No. 2003-41939

[Non-Patent Publication 1] Impulse charging boosts torque at low speed, Findlay Publications, "European Automotive Design", Issue No. February 2004

[Non-Patent Publication 2] Development of an Actuator for a Fast Moving Flap for Impulse Charging, Findlay Publications, "European Automotive Design", Issue No. January 2003

According to the technique disclosed in the Patent Publication 1, an excellent effect in which the high volumetric efficiency of the engine in both the low and high engine-speed ranges can be assured by switching intake-passages depending on whether an engine is operated in a low speed range or in a high speed range. However, as this technique is based on the plurality of intake passages having different lengths for each cylinder, it would be problems about structural complexity of the intake passages and limitations in engine-speed range having an improved volumetric efficiency.

In the technique disclosed in the Non-Patent Publication 1, the solenoid valve designed to move a valve element along a flow path of the intake passage is liable to block the flow of intake air and extremely increase an intake resistance. This would lead to deterioration in volumetric efficiency. Moreover, if the valve is open instantaneously after generation of a negative pressure in a low engine-speed range, an enormous pulsation would be generated to cause loud abnormal noises. These factors make it difficult to put this technique to practical use.

In the device disclosed in the Non-Patent Publication, the flap valve is liable to undergo the resistance of air flowing through an intake pipe, when it is open and closed. Moreover, even in a low or intermediate engine-speed range, it is extremely difficult to controllably open and close the flap valve in synchronization with intake valve timing. These factors make it difficult to put this device to practical use.

In view of the above problems, it is an object of the present invention to obtain an adequate intake pressure and provide enhanced volumetric efficiency, over a wide engine-speed range.

In one aspect of the present invention, the present invention is also directed to reliably achieve operational synchronization in low, intermediate and high engine-speed ranges.

In order to achieve the above object, according to a first aspect of the present invention, there is provided an intake system for a multi-cylinder engine, including: independent intake passages, each defined in an intake pipe, which supply air to a corresponding one of cylinders of the multi-cylinder engine, and an intake port disposed on a down stream side of the intake pipe; and intake valves each adapted to be open and closed a corresponding one of the intake ports in the independent intake passages, the intake system being, a valuable valve timing system is adapted to change an open timing of each of the intake valves; an impulse charging device is adapted to have a valve function in association with an intake stroke in each of the cylinders and at least during a term from the middle of an intake stroke to a compression stroke in the multi-cylinder engine so as to generate a high pressure wave in each of the cylinders; engine-speed detection means detects an engine speed of the multi-cylinder engine; and valve timing control means is operable to control an open timing of the impulse charging device and a valve-open timing of the valuable valve timing system, in accordance with a detection value of the engine-speed detection means, in such a manner as to advance the open timing of the impulse charging device and delay the open timing of each of the intake valves, when the multi-cylinder engine is operated in an higher engine-speed range.

According to the present invention, in low / intermediate engine-speed ranges, the intake valve is firstly open to perform an intake stroke in the state when the impulse charging device is closed, so that a vacuum pressure can be created in the cylinder until the middle of the intake stroke. Then, the impulse charging device is open to allow fresh air to be introduced into the cylinder with a high pressure wave. Thus, in the low / intermediate engine-speed ranges, a sufficient volume of air can be introduced into the cylinder on the intake stroke according to the pressure wave generated by the impulse charging device. Further, in a high engine-speed range, the open timing of the impulse charging device is advanced, and the open timing of the intake valve is delayed, so that the open timings of the impulse charging device and the intake valve will overlap with one another. This makes it possible to ensure an intake charging term in the high engine-speed range having a high intake flow rate so as to obtain a sufficient volumetric efficiency. Thus, the timing of confining the introduced high pressure wave (fresh air) in the cylinder can be adequate controlled in the process of introducing a high pressure wave into the cylinder using the impulse charging device, and an intake charging term of the intake valve can be ensured in the high engine-speed range, so as to obtain a high volumetric efficiency over a wide engine-operation range.

In the intake system set forth in first aspect of the present invention, each of the independent intake passages is designed such that a volume thereof between a portion which acts the valve function of the impulse charging device and a corresponding one of the intake valves provides a natural frequency causing tuning and resonance in a high engine-speed range; and the valve timing control means is operable to control the impulse charging device and the valuable valve timing system in such a manner as to maximize a term during which the impulse charging device and the intake valve are concurrently open, in the high engine-speed range.

In this preferred embodiment, each of the independent intake passages is set to provide a natural frequency causing tuning and resonance in the high engine-speed range, so that the intake system can be designed to ensure a sufficient intake-valve open period in the high engine-speed range. In the high engine-speed range, a volumetric efficiency can be enhanced based on an inertia supercharging effect to be obtained by the setting of the independent intake passage length.

In the intake system set forth in another aspect of the present invention, a ratio of a volume of each of the independent intake passages between a downstream end of a corresponding one of the intake ports and a portion which acts the valve function of the impulse charging device is set in the range between 70 % to 130 % of a single stroke volume of a corresponding one of the cylinders.

The setting range in this preferred embodiment is based on the inventors' knowledge obtained through a simulation analysis in various researches. As described in detail later, the setting range allows a volumetric efficiency at 3500 rpm to be increased to about 90 % or more. In this preferred embodiment is set in the range between 70 % to 130 %. This makes it possible to efficiently increase a torque not only under a transient state but also under a transient state, such as acceleration. The limitation of "the range between 70 % to 130 %" is not intended to exclude even measurement errors and variations due to individual difference which are inevitable in implementing the present invention.

In the intake system set forth in another aspect of the present invention, the impulse charging device includes a rotary valve which so designed as to acts the valve function by rotating in synchronization with a crankshaft of the multi-cylinder engine, the rotary valve has a diameter larger than a sectional width of each of the intake pipes, and a peripheral wall is formed in an opening, wherein each of the intake pipes has an upstream end disposed to face the opening of the rotary valve so as to be selectively open and closed by the rotary valve.

In this preferred embodiment, the impulse charging device employs, as a portion which acts valve function, the rotary valve designed to be rotated in synchronization with a crankshaft of the multi-cylinder engine. Thus, even when the crankshaft is rotated in a high speed range or in a low speed range, a frequency tuning can be reliably achieved to generate a high pressure wave in each cylinder at a desired timing, without undergoing a large intake resistance. In addition, the rotary valve having a diameter greater than a sectional width of each of the intake pipes is moved to perform an operation for opening and closing each of the intake pipes at a high circumferential velocity, so that a strong pressure wave can be generated.

In the intake system set forth in another aspect of the present invention, the multi-cylinder engine is a multi-cylinder four-cycle engine where one power cycle consisting of intake, compression, expansion and exhaust strokes is produced by two reciprocating motions of a piston, wherein the intake system includes power transmission means for transmitting a power of a crankshaft of the four-cycle engine to the rotary valve as a driving source thereof, the power transmission means being designed to rotatably drive the rotary valve at a rotational velocity which is one-half of the rotational velocity of the crankshaft.

According to this preferred embodiment, the rotary valve can be open physically in synchronization with the crankshaft of the engine. For example, a combination of a pulley and a timing belt may be suitably used as the power transmission means. Further, the pressure wave can be propagated into the cylinder while mechanically synchronizing respective opening cycles of the rotary valve and the intake valve. This makes it possible to accurately synchronize between respective phases of the rotary valve and each of the cylinders so as to bring out the pressure-pulse generating function with a higher degree of accuracy to provide more enhanced volumetric efficiency. Furthermore, the capability of propagating the pressure wave to the cylinder while mechanically synchronizing respective opening cycles of the rotary valve and the intake valve can facilitate achieving equalization in length of the independent intake passages.

In the intake system set forth in another aspect of the present invention, a valuable valve timing system is adapted to change an open timing of each of the intake valves; a rotary valve serving as a valve of the impulse charging device is adapted to be open in association with an intake stroke in each of the cylinders and at least during a term from the middle of an intake stroke to a compression stroke in the multi-cylinder engine so as to generate a high pressure wave in each of the cylinders; and a hollow cylindrical-shaped collecting portion is disposed at respective upstream ends of the intake pipes and fluidically connected with the intake pipes, wherein the rotary valve is disposed inside the collecting portion in a concentric arrangement, the rotary valve has a diameter larger than a sectional width of each of the intake pipes, and a peripheral wall formed in an opening, each of the intake pipes has an upstream end which is fluidically connected to the collecting portion in such a manner as to be disposed to face the opening of the rotary valve so as to be selectively open and closed by the rotary valve.

According to this preferred embodiment of the present invention, the rotary valve can be rotated inside the hollow cylindrical-shaped collecting portion to provide and intermit air communication with each of the intake pipes so as to perform an operation for opening and closing each of the independent intake passages. This makes it possible to effectively utilize the volume of the collecting portion, and further increase the diameter of the rotary valve without increase in size of the entire system. In addition, the rotary valve used as the portion which acts as the valve function of the impulse charging device can be instantaneously open each of the intake pipes at a high circumferential velocity to generate a large pressure wave while maintaining low noise even in a low engine-speed range, so as to provide enhanced volumetric efficiency to produce a high torque. In the intake system set forth in another aspect of the present invention, each of flow paths between the respective intake ports and the opening of the rotary valve is set at approximately the same length.

According to this preferred embodiment, any of the cylinders can obtain the same volumetric efficiency at the same conditions to eliminate variation in torque between the cylinders. 8. In the intake system set forth in another aspect of the present invention, the multi-cylinder engine is a four-cylinder four-cycle engine comprising four in-line cylinders consisting of first to fourth cylinders numbered from one end of the engine in the in-line direction, wherein the intake stroke is performed in each of the first, third, fourth and second cylinders in this order with a phase difference of 180 degrees by crank angle, wherein a pair of upstream end openings of the intake pipes for the first and second cylinders are fluidically connected to the collecting portion in a mutually displaced manner-in-the circumferential direction of the rotary valve with a phase difference of 90 degrees or about 90 degrees therebetween, a pair of upstream end openings of the intake pipes for the fourth and third cylinders are fluidically connected to the collecting portion in a mutually displaced manner in the circumferential direction of the rotary valve with a phase difference of 90 degrees or about 90 degrees therebetween, each of the pairs of upstream end openings of the intake pipes for the first and fourth cylinders and for the second and third cylinders arc so disposed as to juxtapose to each other with the same phase in the circumferential direction of the rotary valve, and the rotary valve is designed to be rotatably driven at a rotational velocity which is one-half of the rotational velocity of a crankshaft of the engine, and formed in a pair of the openings having a phase difference of 180 degrees or about 180 degrees therebetween in the circumferential direction, so as to be open the respective upstream end openings of the intake pipes for the first to fourth cylinders in the order of the intake stroke.

According to this preferred embodiment, the rotary valve having two openings allows a pressure wave to be propagated to each of the intake pipes of the four-cylinder engine at a desired timing so as to provide enhanced volumetric efficiency to obtain a higher torque. This makes it possible to satisfy both enhancement of the torque production characteristic based on the equalization in length, and improvement of the response based on shortening of each of the independent intake passages.

In the intake system set forth in another aspect of the present invention, the valve timing control means is operable, when the multi-cylinder engine in a stopped state is started, to determine that the engine speed is in a low range, and then control the impulse charging device and the valuable valve timing system.

According to this preferred embodiment, during startup of the engine in a so-called "cold stopped state", an overlapping zone between respective open periods of the intake valve and the impulse charging device is minimized to allow fresh air to be rapidly introduced into the cylinder with a high pressure wave at a time when a high negative pressure is created in the cylinder. Thus, an adiabatic compression function in the cylinder is enhanced, and an in-cylinder temperature is increased. This provides enhanced engine starting performance.

In the intake system set forth in another aspect of the present invention, the multi-cylinder engine includes a turbocharger having an intercept point at an intermediate engine-speed range, wherein the valve timing control means is operable to control the impulse charging device and the valuable valve timing system in such a manner as to maximize a term during which the impulse charging device and each of the intake valves are concurrently open in an engine-speed range higher than the intercept point of the turbocharger.

According to this preferred embodiment, a pressure wave can be introduced into each of the cylinders in the engine-speed range before reaching the intercept point of the turbocharger, and the respective open periods between the intake valve and the impulse charging device can be overlapped in the intermediate and high engine-speed ranges after reaching the intercept point, to ensure a sufficient intake charging term. This makes it possible to cover an intake volume in the low engine-speed range where a supercharging effect can be sufficiently obtained from the turbocharger, by the impulse charging device, and to effectively bring out the supercharging effect of the turbocharger when a charging pressure reaches the intercept point, so as to provide enhanced charging efficiency.

In the intake system set forth in another aspect of the present invention, the valuable valve timing system is designed to be open each of the intake valves with a change of a phase relative to a crank angle.

According to this preferred embodiment, an intake pressure can be adjusted without modifying each of the intake valves designed to be open and closed at a full-lift amount. This can facilitate combining the impulse charging device with the valuable valve timing system to adequately adjust the intake pressure from the low engine-speed range to the high engine-speed range. Particularly in the high engine-speed range, each valve-opening lift of the intake valves can be set to be full lift. Thus, when the open timing of the impulse charging device is advanced to adjust the intake pressure, a high pressure wave to be generated by the impulse charging device can be readily adjusted to obtain an appropriate intake pressure.

In the intake system set forth in another aspect of the present invention, power transmission means transmits a power of a crankshaft of the multi-cycle engine to the impulse charging device as a driving source thereof.

According to this ninth preferred embodiment, the impulse charging device can be open physically in synchronization with the crankshaft of the engine. For example, a combination of a pulley and a timing belt may be suitably used as the power transmission means.

In the intake system set forth in another aspect of the present invention, the impulse charging device includes an electric motor serving as a driving source thereof.

According to this ninth preferred embodiment of the present invention, in the low engine-speed range requiring high followability with respect to engine load, each of the intake valves can be open and closed at a low lift amount to quickly supply high-pressure fresh air into the cylinder in a short period of time. In the intermediate engine-speed range, the intake valve can be changed in phase, and open/closed at a high lift amount so as to suppress a high pressure wave to be generated by the impulse charging device. Further, in the high engine-speed range where a sufficient volume of intake air can be ensured, the open period of the intake valve and the open period of the impulse charging device can be overlapped to prevent an intake pressure from being excessively increased.

In the intake system set forth in another aspect of the present invention, a valuable valve timing system is adapted to change an open timing of each of the intake valves; an impulse charging device is adapted to have a valve function in association with an intake stroke in each of the cylinders and at least during a term from the middle of an intake stroke to a compression stroke in the multi-cylinder engine so as to generate a high pressure wave in each of the cylinders; engine-speed detection means detects an engine speed of the multi-cylinder engine; and the valuable valve timing system is operable to allow the intake valve to have a relatively low lift and a relatively high lift, respectively, in a low engine-speed range and in intermediate and high engine speed ranges; wherein the valve timing control means is operable to control an open timing of the impulse charging device and a valve-open timing of the valuable valve timing system, in accordance with a detection value of the engine-speed detection means, in such a manner as to advance the open timing of the impulse charging device and delay the open timing of the intake-valve, when the engine speed in an intermediate engine-speed range of the multi-cylinder engine becomes higher, and to maximize a term during which the impulse charging device and the intake valve are concurrently open, in low and high engine-speed ranges.

According to this preferred embodiment, the portion which acts as the valve function of the impulse charging device is composed of the rotary valve disposed inside the collecting portion fluidically connected with the intake pipes. Thus, even when the crankshaft is rotated in a high speed range or in a low speed range, a frequency tuning can be reliably achieved to generate a high pressure wave in each cylinder at a desired timing, without undergoing a large intake resistance. In addition, the rotary valve disposed inside the collecting portion of the intake pipes makes it possible to instantaneously open each of the intake pipes at a high circumferential velocity to generate a high pressure wave so as o provide enhanced volumetric efficiency to produce a high torque. Further, the collecting portion having a length set to be less than the edge-to-edge distance between respective downside ends of the intake pipes in the arranging direction of the cylinders makes it possible to improve the response of the impulse charging device with respect to enhancement of torque.

These and other objects, features, and advantages of the present invention will become apparent upon reading the following detailed description along with the accompanying drawings.
FIG. 1 is a right side view of a multi-cylinder engine employing an intake system according to one embodiment of the present invention.
FIG 2 is a schematic sectional view taken along the line A-A in FIG 1.
FIG. 3 is a fragmentary schematic perspective view of the intake system according to the embodiment.
FIG. 4 is a fragmentary enlarged sectional view of the intake system in FIG. 2.
FIG 5 is a block diagram showing the configuration of an ECU in this embodiment.
FIG 6 is a graph showing a relationship between a valve lift amount and a crank angle.
FIG. 7 is a flow chart showing a control process of the ECU in the embodiment in FIG 1.
FIG 8 is a schematic sectional view of the intake system in the process from an intake stroke to an exhaust stroke in a PGV mode.
FIG 9 is a schematic sectional view of the intake system in the process from an intake stroke to an exhaust stroke in a PGV mode.
FIG. 10 is a schematic sectional view of the intake system in the process from an intake stroke to an exhaust stroke in a PGV mode.
FIG 11 is a graph showing a relationship of a crank angle, an in-cylinder pressure and an intake-valve lift amount in a first cylinder,
FIG. 12 is a graph showing one example of a simulation result of an intake-valve opening/closing timing and a rotary valve open timing.
FIG. 13 is a graph showing a relationship between a volumetric efficiency and an engine speed in a high-speed engine.
FIG 14 is a graph showing a relationship between a volumetric efficiency and an engine speed in a low/intermediate-speed engine.
FIG 15 is a composite graph of peak values at respective rotary valve open timings in FIGS. 13 and 14.
FIG. 16 is a graph showing a relationship between a volumetric efficiency and an engine speed in specific engine specifications.
FIG 17 is a schematic sectional view showing a multi-cylinder engine employing an intake system according to another embodiment of the present invention.
FIG 18 is a block diagram showing the configuration of an ECU for the intake system in FIG 17.
FIG 19 is a schematic sectional view showing a multi-cylinder engine employing an intake system according to still another embodiment of the present invention.
FIG. 20 is a flow chart showing a control process for the intake system in FIG. 19.
FIG. 21 is a graph showing a relationship between a valve lift amount and a crank angle in a multi-cylinder engine employing an intake system according to yet another embodiment of the present invention.
FIG. 22 is a flow chart showing a control process for the intake system in FIG 21.

With reference to the accompanying drawings listed above, a preferred embodiment of the present invention will now be described.

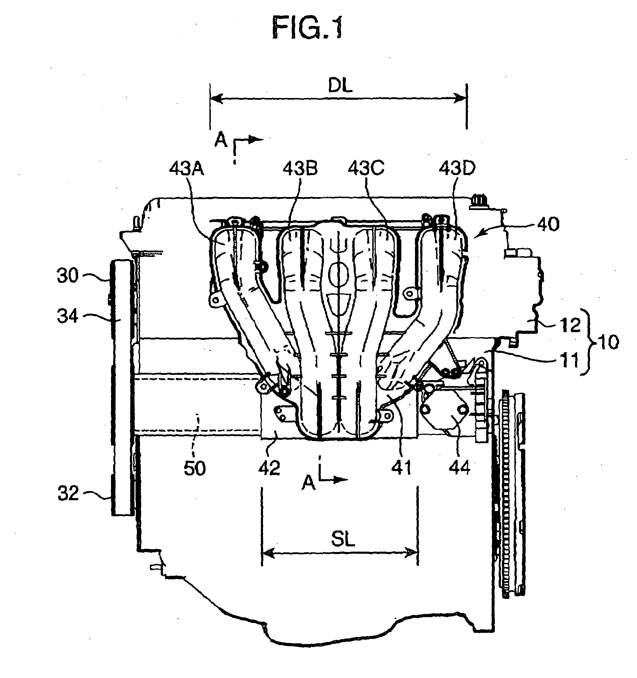

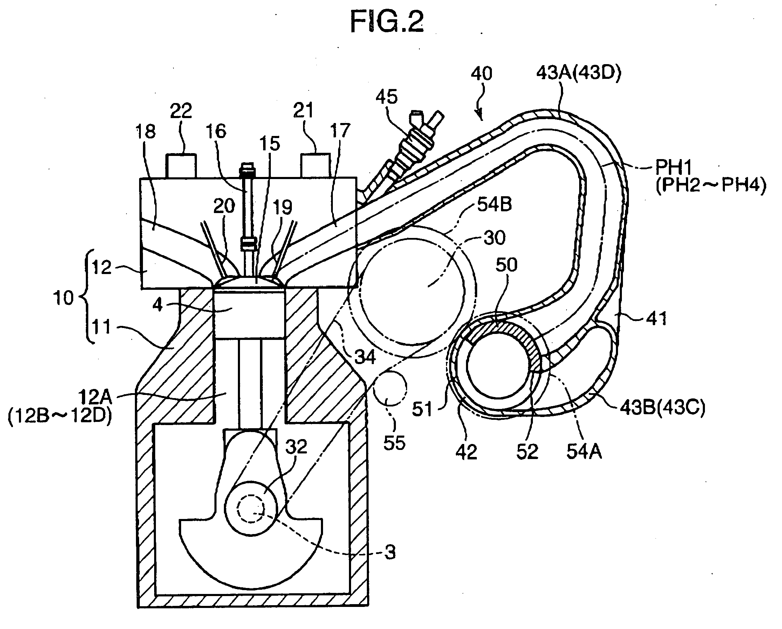

FIG 1 is a right side view of a four-cycle spark ignition engine employing an intake system 40 according to one embodiment of the present invention, and FIG. 2 is a schematic sectional view taken along the line A-A in FIG 1.

Referring to these figures, this engine comprises an engine body 10 which includes a cylinder block 11 and a cylinder head 12 integrally mounted on an upper portion of the cylinder block 11. The engine body 10 has first to fourth cylinders 12A to 12D. A piston 4 connected to a crankshaft 3 is fittingly inserted into each of the cylinders 12A to 12D to define a combustion chamber 15 thereabove.

Four spark plugs 16 are fixedly attached to the cylinder head 12 at positions corresponding, respectively, to the cylinders 12A to 12D. Each of the spark plugs 16 is installed in such a manner that its tip is exposed to the corresponding combustion chamber 15 from above.

Each of the cylinders 12A to 12D has an intake port 17 and an exhaust port 18 which are formed in the cylinder head 12 to extend from the outside of the cylinder head 12 to each of the combustion chambers 15. The intake and exhaust ports 17 and 18 are equipped with an intake valve 19 and an exhaust valve 20, respectively.

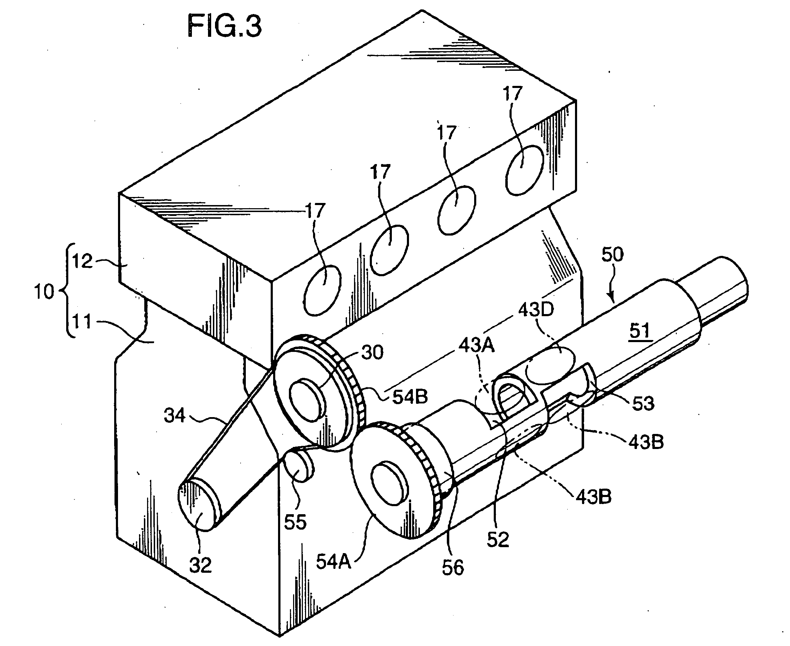

The intake and exhaust valves 19 and 20 are designed to be open and closed, respectively, the intake and exhaust ports 17 and 18 in a synchronous manner with a given phase difference through intake and exhaust camshafts (not shown) supported by the engine body 10. Each of the camshafts is connected to a cam sprocket gear (not shown) which is driven by a cam pulley 30 through a timing belt (not shown) (see FIG 3). The pulley 30 is attached to a front surface of the engine body 10 rotatably around an axis parallel to the crankshaft 3. The crankshaft 3 has an output pulley 32 fixedly attached thereto on the front side of the engine body 10. That is, the pulleys 30, 32 are designed to be synchronously moved through the timing belt 34.

The intake and exhaust camshafts are associated, respectively, with valuable valve timing systems 21 and 22 each adapted to adjust a rotational phase thereof so as to change a valve-open timing. That is, through the valuable valve timing systems 21, a rotational phase of the intake valve 19 relative to a crank angle can be selectively changed.

Intake system 40 according to this embodiment comprises an intake manifold 41 fixed to a side portion of the engine body 10, and a rotary valve 50 disposed inside the intake manifold 41.

The intake manifold 41 is fixedly attached to the engine body 10 through a support member (not shown). The intake manifold 41 integrally includes a surge tank 42 serving as a collecting portion extending horizontally in the frontward/rearward or longitudinal direction of the engine body 10 (the arranging direction of the cylinders 12A to 12A, or the in-line direction of the cylinders 12A to 12A in this embodiment), and first to fourth branch pipes 43A to 43D serving as four intake pipes, respectively, defining therein four independent intake passages PH1 to PH4 which are fluidically isolated from each other and fluidically connected to the surge tank 42 individually. A throttle body 44 is fixed to a rear end portion of the surge tank 42, and a throttle valve (not shown) is housed in the throttle body 44. In this specific embodiment, each of the independent intake passages is comprised of the combination of each of the first to fourth branch pipes 43A to 43D and a corresponding one of the intake ports 17.

The surge tank 42 is an approximately cylindrical-shaped member. The surge tank 42 in fluid communication with the branch pipes 43A to 43D serves as a means to absorb a differential pressure between the branch pipes 43A to 43D so as to prevent the occurrence of abnormal noises and improper operation of sensors. In this embodiment, a length SL of the surge tank 42 in the arranging or in-line direction of the cylinders is set to be less than the edge-to-edge distance DL between respective downstream ends of the branch pipes 43A to 43D in the arranging or in-line direction of the cylinders (see FIG. 1).

Each of the branch pipes 43A to 43D are associated with a corresponding one of the cylinders 12A to 12D, and formed to have a shape with an approximately L-shaped curve in front view, so as to provide fluid communication between the corresponding one of the cylinders 12A to 12D and the surge tank 42. Each length of the independent intake passages PH1 to PH4 (in this illustrated embodiment, a length between the downstream end of the each intake port 17 and an outer peripheral surface 51 of the rotary valve 50 in the surge tank 42) is set at approximately the same length. Specifically, in order to provide enhanced response of the rotary valve 50 with respect to torque, each of the independent intake passages PH1 to PH4 has a flow-path length of 500 mm or less, as described in more detail later. Further, a "independent-intake-passage /stroke-volume ratio" (a ratio of a single independent-intake-passage volume between a downstream end of each of the intake ports 17 and a corresponding one of openings 52 and 53 of the rotary valve 50, to a single stroke volume of each of the cylinders) is set in the range between 70 % to 130 % (independent intake passage length: 500 mm or less). The single independent-intake- passage volume is determined to correspond to a natural frequency causing tuning and resonance of intake air in a high engine-speed range (4500 rpm or more). This allows intake air to be turned and resonated at the natural frequency in the high speed range. Thus, in the high engine-speed range, a sufficient opening period of the intake valve 19 can be assured, and a volumetric efficiency can be enhanced based on an inertia supercharging effect to be obtained by the setting of the independent intake passage length.

Further, in this embodiment, a fuel injection valve 45 is provided in each of the branch pipes 43A to 43D. This fuel injection valve 45 is provided with a needle valve and a solenoid, and designed to be driven and open during a term corresponding to a pulse width of a pulse signal entered therein from an ECU 60 of the engine, and inject fuel in an amount corresponding the valve opening period toward the vicinity of electrodes of the spark plug 16.

The rotary valve 50 is formed as a cylindrical-shaped member, and arranged such that the outer peripheral surface 51 thereof is in contact with an inner peripheral surface of the surge tank 42 slidably and rotatably.

FIG 3 is fragmentary schematic perspective view of the intake system according to this embodiment.

Referring to this figure, an input gear 54A is fixedly attached to a front end of the rotary valve 50 in a concentric arrangement. The input gear 54A is engaged with an output gear 54B fixedly attached to the cam pulley 30 in a concentric arrangement, and a power is transmit from the crankshaft 3 through the output gear 54B at a ratio of 1 : 0.5. In other words, the rotary valve 50 is synchronized with the cam pulley 30 at a ratio of 1 : 1. The rotary valve 50 has a peripheral wall formed with the aforementioned pair of openings 52 and 53 for providing fluid communication between an inner space of the surge tank 42 and each of the branch pipes 43A to 43D. The openings 52 and 53 are displaced from one another in the circumferential direction with a phase difference of 180 degrees. Further, the front opening 52, which is closer to the input gear 54A in the axial direction of the rotary valve50, is displaced relative to the rear opening 53 toward the downstream in the driven direction of the rotary valve50. FIG 3, the reference numeral 55 indicates an idler.

In the illustrated embodiment, a rotary valve advance device 56 is interposed between the rotary valve 50 and the input gear 54A. The rotary valve advance device 56 is provided as a means to provide a phase difference between the input gear 54A and the rotary valve 50 so as to change an open timing of the rotary valve 50. For example, a rotational phase control apparatus previously proposed by the inventors (see Japanese Patent Laid-Open Publication No. 11-107718) may be fundamentally used as the rotary valve advance device 56.

In the illustrated embodiment, the engine is an in-line four-cylinder engine. Given that the cylinders are 1st to 4th cylinders numbered in turn from the front side of the engine body, the engine is designed to have an intake stroke in the 1st cylinder 12A, the 3rd cylinder 12C, the 4th cylinder 12D and the 2nd cylinder 12A in this order. Further, given that the 1st cylinder firstly has an intake stroke, the relationship between the cylinders and strokes will be as shown in Table 1.

**Table 1**

| Cylinder No. | Stroke | | | |
|---|---|---|---|---|
| 1st cylinder | intake stroke | compression stroke | expansion stroke | exhaust stroke |
| 2nd cylinder | compression stroke | expansion stroke | exhaust stroke | intake stroke |
| 3rd Cylinder | exhaust stroke | intake stroke | compression stroke | expansion stroke |
| 4th cylinder | expansion stroke | exhaust stroke | intake stroke | compression stroke |

Thus, in this embodiment, with respect to the opening 52 of the rotary valve 50, the 1st and 2nd branch pipes 43A and 43B are respectively located on the upstream and downstream sides in the rotational direction of the rotary valve 50, or placed on opposite sides with a phase difference. Further, with respect to the opening 53, the 4th and 3rd branch pipes 43D and 43C are respectively located on the rotationally upstream and downstream sides, or placed on opposite sides with a phase difference.

More specifically, the 1st branch pipe 43A in fluid communication with the 1st cylinder 12A and the 2nd branch pipe 43B in fluid communication with the 2nd cylinder 12B are fixed to the surge tank 42 in turn from the rotationally upstream side in such a manner as to be respectively located on the opposite sides relative to the front opening 52 with a phase difference of 90 degrees. The 4th branch pipe 43D in fluid communication with the 4th cylinder 12D and the 3rd branch pipe 43C in fluid communication with the 3rd cylinder 12C are fixed to the surge tank 42 in turn from the rotationally upstream side in such a manner as to be respectively located on the opposite sides relative to the rear opening 53 with a phase difference of 90 degrees. Further, the 1st branch pipe 43A and the 4th branch pipe 43D (or the 2nd branch pipe 43B and the 3rd branch pipe 43C) are disposed with the same phase in the circumferential direction of the surge tank 42. This arrangement makes it possible to be open and closed the branch pipes 43A to 43D at a given timing irrespective of engine speed, and can contribute to equalization in length and reduction in size of the branch pipes 43A to 43D. Thus, each length of the independent intake passages PH1 to PH4 can be minimized to achieve the intake system 40 having higher response with respect to enhancement of torque. Further, in connection with the aforementioned structure that the length SL of the surge tank 42 in the arranging direction of the cylinders is set to be less than the edge-to-edge distance DL between the downstream ends of the branch pipes 43A to 43D in the arranging direction of the cylinders (see FIG. 1), the upstream ends of the branch pipes 43A to 43D are converged in the arranging direction of the cylinders, as compared to the downstream ends thereof. Thus, the intake system according to this embodiment can exhibit excellent response with respect to enhancement of torque.

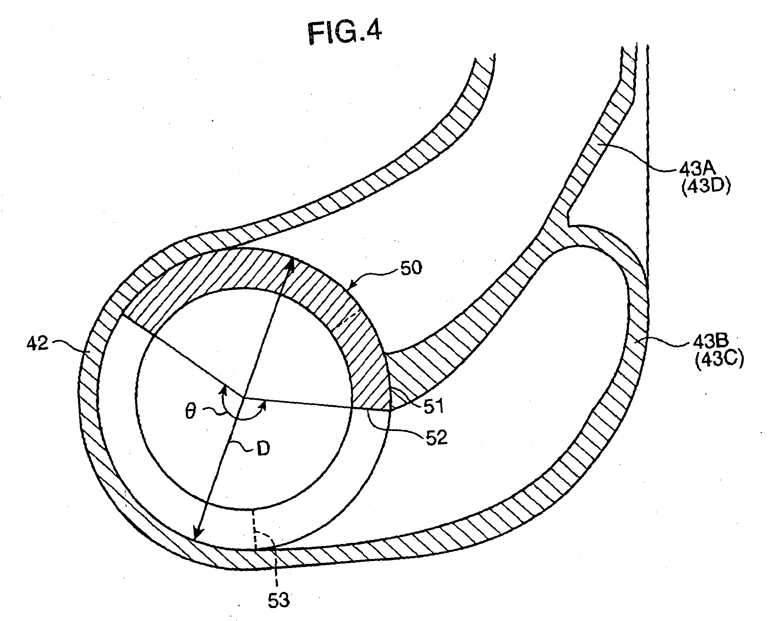

FIG. 4 is a fragmentary enlarged sectional view of the intake system in FIG. 2.

Referring to this figure, the rotary valve 50 has a diameter D larger than each sectional width of the branch pipes 43A to 43D. This rotary valve 50 can be rotated in synchronization with the crankshaft 3 to be open each of the branch pipes 43A to 43D corresponding to the openings 52 and 53 during a reduced term. In addition, when the rotary valve 50 is rotated, air is supplied to each of the branch pipes 43A to 43D facing the outer peripheral surface of the rotary valve 50 through each of the openings 52 and 53 formed in the peripheral wall of the rotary valve 50. This makes it possible to suppress pulsation of the air and reduce the occurrence of abnormal noises.

Based on an after-mentioned simulation analysis, each of the openings 52 and 53 is formed in the peripheral wall of the rotary valve 50 at an opening angle θ allowing the rotary valve 50 to be open in a term from the last stage of an intake stroke to the last stage of a compression stroke. Thus, in the initial stage of the intake stroke, the rotary valve 50 shields the surge tank 42 even after the intake valve 10 is open the intake port 17, and thereby a negative pressure will be created in the corresponding branch pipe 43A (to 43D) along with the intake stroke until the rotary valve 50 is open.

The engine body 10 is also provided with two crank angle sensors 61 and 62. These crank angle sensors 61 and 62 are disposed around the crankshaft 3 with a given phase difference. A detection signal from the crank angle sensor 61 is used for detecting an engine speed, and both detection signals from the crank angle sensors 61 and 62 are used for detecting a rotation direction and rotation angle of the crankshaft 3.

With reference to FIGS. 2 to 5, the aforementioned ECU 60 of the engine will be described below.

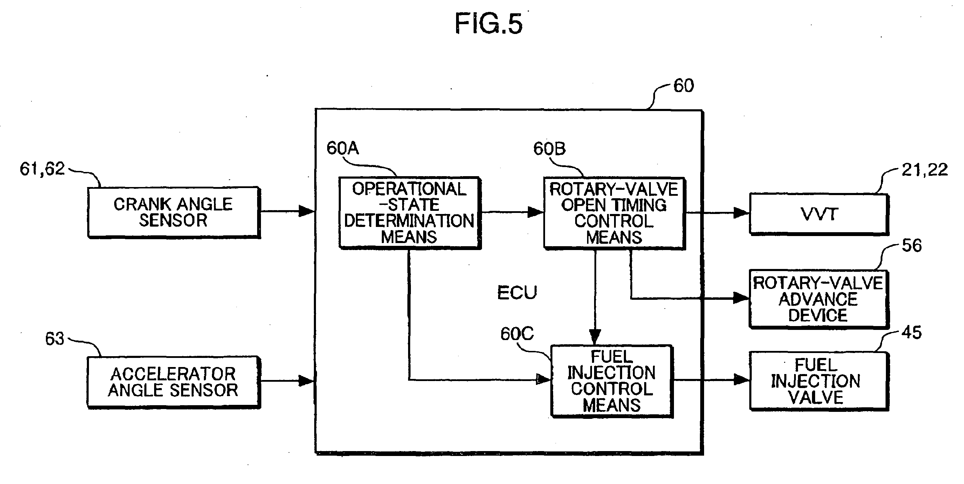

FIG. 5 is a block diagram showing the configuration of the ECU 60 in this embodiment.

As shown in this figure, the ECU 60 logically comprises operational-state determination means 60A for determining whether the engine is operated in a high load range, rotary valve open timing control means 60B for controlling an open timing of the rotary valve 50, and fuel injection control means 60C for controlling a fuel injection timing of each of the fuel injection valves 45.

The crank angle sensors 61 and 62 and an accelerator angle sensor 63 are electrically connected to the ECU 60. The operational-state determination means 60A of the ECU 60 is designed to determine the ranges of engine speed and engine load in accordance with detection signals from these sensors 61 to 63.

The rotary valve open timing control means 60B of the ECU 60 is designed to control the valuable valve timing system 21 and 22 and the rotary valve advance device 56 in accordance with an engine speed obtained by the detection signals from the crank angle sensors 61 and 62.

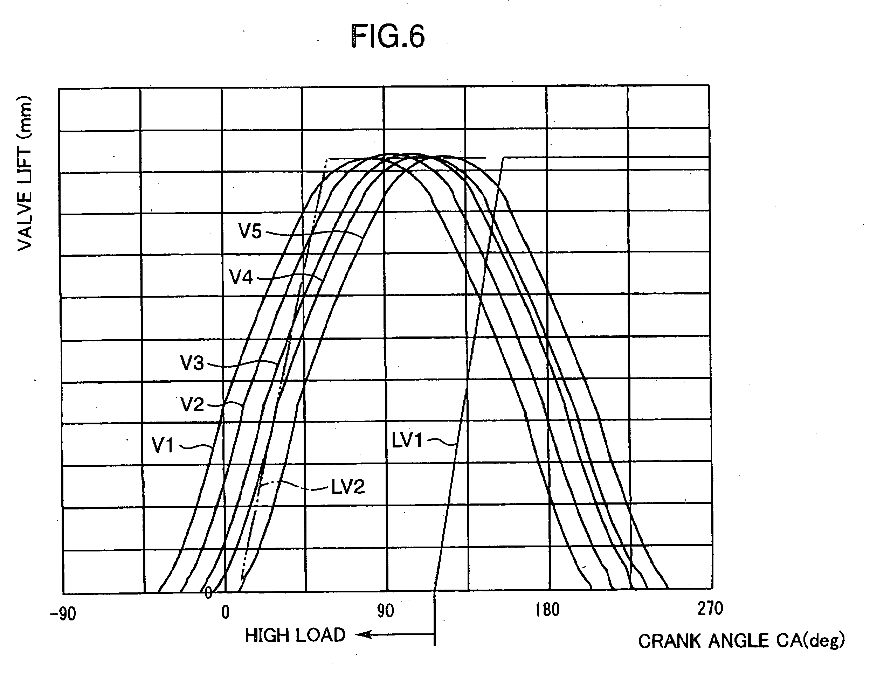

FIG 6 is a graph showing a relationship between a valve lift amount and a crank angle CA.

The relationship will be described in detail with reference to FIG. 6. As indicated by the curves V1, to V5, the valuable valve timing system 21 is controlled such that an intake-valve open timing is delayed as an engine speed is increased or shifted to a higher range. As indicated by the line LV1 in FIG 6, the rotary valve open timing control means 60B is operable to be open the rotary valve 50 at a relatively delayed timing (piston 4 of the cylinder on an intake stroke is at about 120° CA) in a low engine-speed range (about 2500 rpm or less), and advance a rotary valve open timing as an engine speed is increased. Then, in a high engine-speed range (about 4000 rpm or more), the rotary valve open timing control means 60B is operable to maximize an overlap between a rotary valve opening period and an intake-valve opening period, as indicated by the line LV2 in FIG 6.

In response to the open timing of the rotary valve 50 determined by the rotary valve open timing control means 60B, the fuel injection control means 60C of the ECU 60 is operable to inject fuel in an intake stroke at least in a high engine-load range.

Specifically, the fuel injection control means 60C is designed to start fuel injection about just before the rotary valve 50 is open. Thus, the injected fuel can be efficiently supplied to the cylinder together with a high pressure wave generated by the rotary valve 50. Further, the fuel injected in the high engine-load range to the cylinder on the intake stroke makes it possible to lower an in-cylinder temperature so as to prevent self-ignition and suppress the occurrence of knocking. The timing of "about just before the rotary valve 50 is open" may be set at any timing as long as it is in the intake stroke at latest. If it is necessary to advance the rotary valve 50 in the high engine-speed range, the fuel injection may be performed the precedent or exhaust stroke instead of the intake stroke.

While an amount of fuel to be injected may be appropriately adjusted depending on running conditions of a vehicle, as with conventional control means, it is desirable to inject fuel at an earlier timing than the open timing of the rotary valve 50. In this case, even if a large amount of fuel is injected to perform combustion at a rich air-fuel ratio, the injected fuel can be efficiently supplied to the cylinder together with a high pressure wave generated by the rotary valve 50.

A control process of the ECU 60 in this embodiment will be described below.

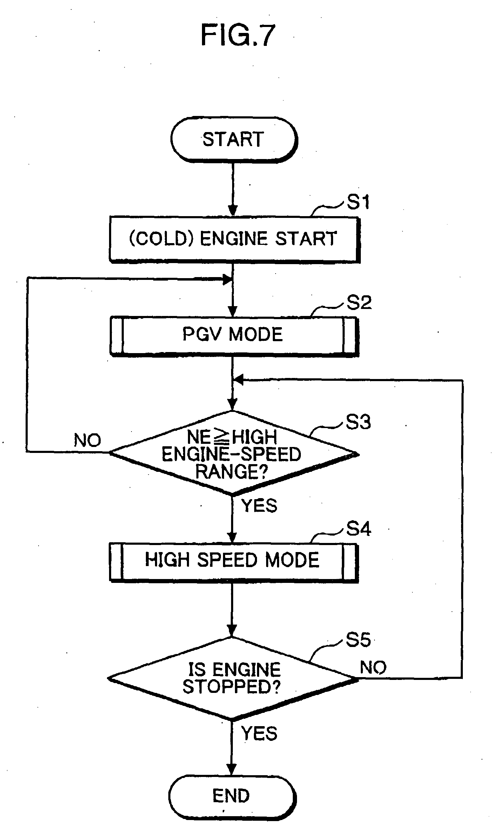

FIG. 7 is a flowchart showing the control process of the ECU 60 in this embodiment.

Referring to this figure, when the engine in a stopped state is started (Step S1), the ECU 60 sets the operational-state determination means 60A, the rotary valve open timing control means 60B and the fuel injection control means 60C to a PGV mode (Step S2). In this PGV mode, each of the intake valves 19 is open and closed in the characteristic curves V1 to V5 in FIG. 6 according to an engine speed Ne, and the rotary valve 50 is open at the timings LV1 to LV2 in FIG 6. As the result, in the low engine-speed range, the open timings of the intake valve 19 and the rotary valve 50 are respectively advanced and delayed so that a large pressure wave can be generated because the fluidically connection between the surge tank 42 and the cylinder will be established only after the piston 4 comes close to a bottom dead center (BDC), while in the intermediate engine-speed ranges, a pressure wave adequately suppress is generated by the rotary valve 50 so as to obtain enhanced volumetric efficiency . When the engine speed Ne reaches a given high engine-speed range (e.g. 4500 rpm or more), the control mode of the means 60A to 60C is shifted to a high speed mode (Steps S3 and S4). In this high speed mode, the intake valve 19 is open and closed in the characteristic curve V5 in FIG. 6, and the rotary valve 50 is open at the timing up to LV2 in FIG. 6. This makes it possible to prevent an intake pressure from being excessively increased, in the high engine-speed range where a sufficient volume of intake air can be obtained.

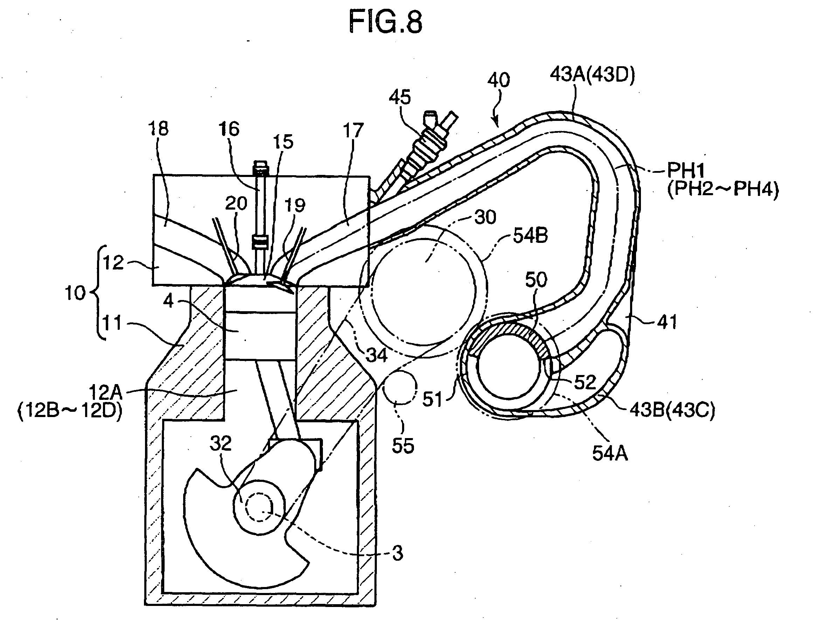

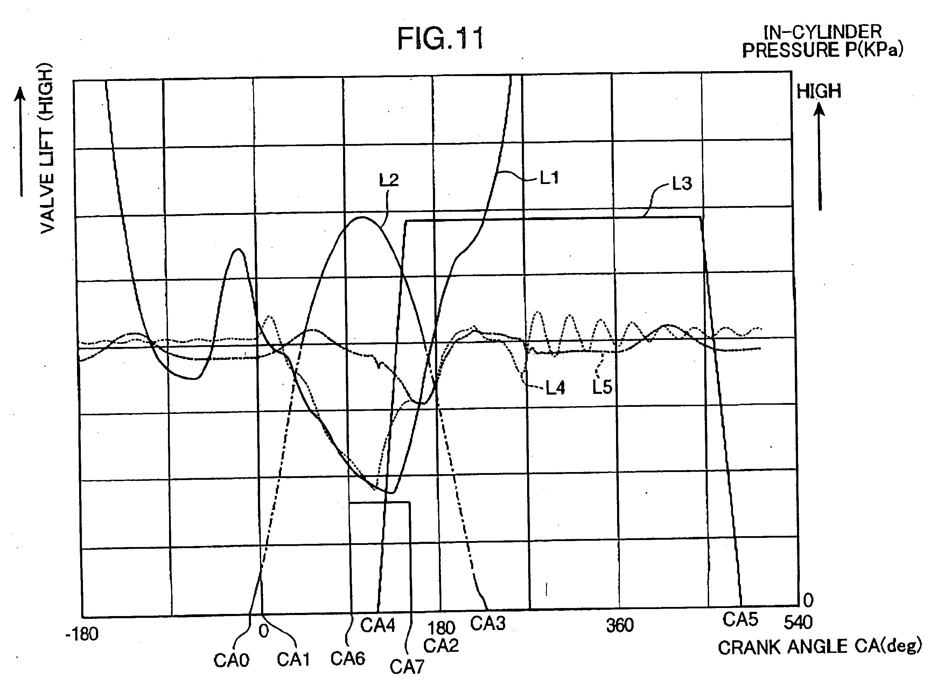

With reference to FIGS. 2, 8 to 10 and 11, opening/closing timings of the rotary valve 50 in the PGV mode will be described below. FIGS. 8 to 10 are schematic sectional views showing the intake system in the process from an intake stroke to an exhaust stroke in the PGV mode. FIG 11 is a graph showing a relationship of a crank angle (CA), an in-cylinder pressure P and an intake-valve lift amount in the 1st cylinder 12A.

Referring to FIGS. 2 and 8, for example, when the 1st cylinder 12A is shifted to an intake stroke (A1 to CA in FIG 11), the intake valve 19 starts opening just before sifting from an exhaust stroke to the intake stroke (CA0 in FIG 11). However, in this stage, the opening 52 of the rotary valve 50 is still closed. Thus, as indicated by the curves L1, L4 in FIG 11, a negative pressure is created in the branch pipe 43A and the 1st cylinder 12A as the piston 4 is moved closer to a BDC.

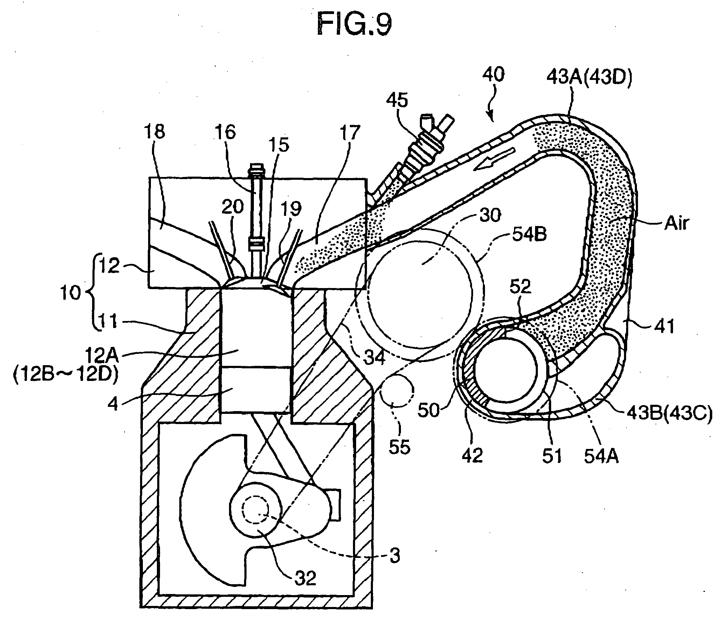

As shown in FIG 9, when the piston 4 comes close to the BDC (in the illustrated embodiment, CA4 in FIG 11: about 120° CA), the rotary valve 50 is instantaneously open at a high circumferential velocity. Then, air in the surge tank 42 is pulsed (generation of a pressure wave) by the negative pressure created in the 1st cylinder 12A, and rapidly sucked into the 1st cylinder 12A. During a given term stating just before the rotary valve 50 is open (CA6 to CA7 in FIG. 11), the fuel injection control means instructs the fuel injection valve 45 to inject fuel. The injected fuel is rapidly sucked into the 1st cylinder 12A together with fresh air according to the pressure pulse (pressure wave) generated in the 1st cylinder 12A. Thus, even during combustion at a rich air-fuel ratio, a desired amount of fuel can be supplied into the cylinder without attachment of fuel on the inner wall defining the independent intake passage.

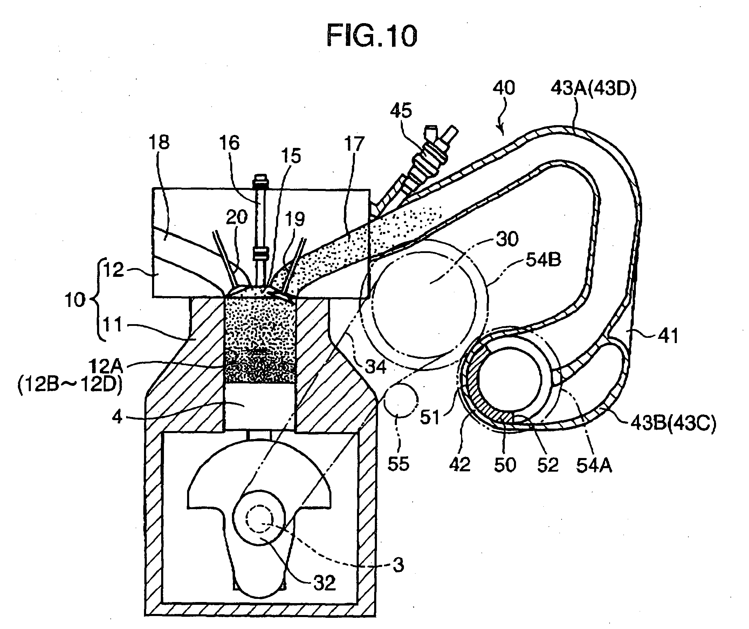

Then, as shown in FIG 10, when the piston 4 reaches the BDC (CA2 in FIG 11), in connection with the "independent-intake-passage/stroke-volume ratio" set in the range between 70 % to 130 % (independent intake passage length of 500 mm or less), air from the surge tank 42 is rapidly charged into the 1st cylinder 12A. Just thereafter (in the illustrated embodiment, CA3: about 225° CA), the intake valve 19 is closed. In this way, a significantly high volumetric efficiency can be obtained over a wide engine-speed range (2000 rpm or more).

Then, the piston 4 is moved to compression and expansion strokes, and the spark plug is activated after fuel injection to induce combustion of an obtained air-fuel mixture. After the combustion, the combustion gas is discharged through an exhaust stroke. After the intake port 17 is closed by the intake valve 19, the opening 52 of the rotary valve 50 will close the branch pipe 43A at a given timing (CA5 in FIG. 11: about 270° CA).

A relationship between the opening/closing timings of the rotary valve 50 and the opening/closing timings of the intake valve 19 will be described below.

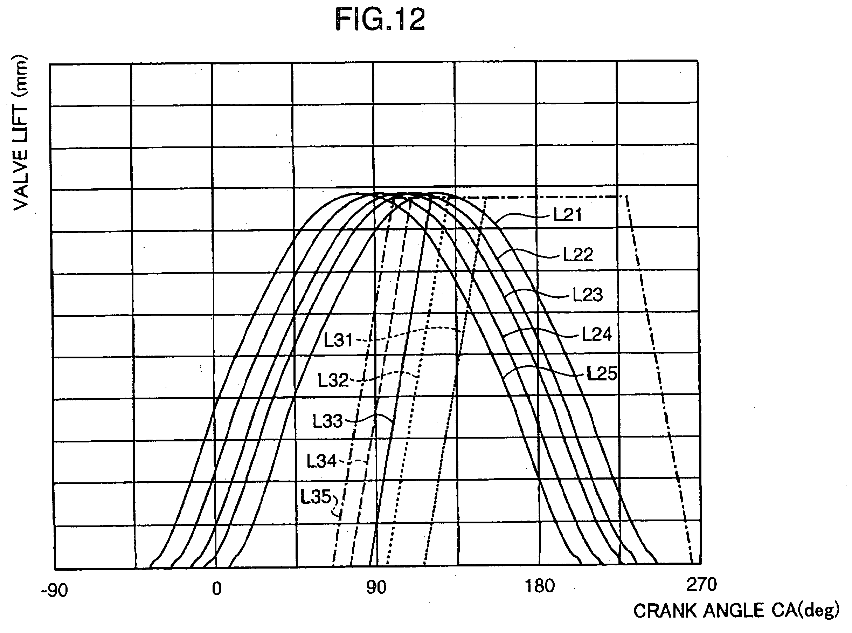

FIG. 12 is a graph showing one example of a simulation result obtained by variously changing the opening/closing timing of the intake valve 19 and the open timing of the rotary valve 50.

As shown in FIG 12, the inventors calculated a volumetric efficiency based on a simulation analysis conducted by changing the opening/closing timing (L21 to L23) of the intake valve 19 and the open timing (L31 to L35) of the rotary valve 50, and then selected the opening/closing timing (L21 to L23) and the open timing (L31 to L35) which provide the highest volumetric efficiency.

Then, the inventors checked a volumetric efficiency for each of the intake-valve timings L31 to L35, using two types of engines: (1) a high-speed (four-cylinder) engine suitable for sports cars with a high regard for a volumetric efficiency in a high engine-speed range, wherein the opening period (crank angle) of the intake valve 19 is set at a large value, and the intake valve 19 is designed to be closed at a crank angle later than the CA3, and (2) a low/intermediate-speed (four-cylinder) engine suitable for popular passenger cars with a high regard for a volumetric efficiency in low/intermediate engine-speed ranges, wherein the opening period (crank angle) of the intake valve 19 is set at a relatively small value (about 25° to 30° CA)

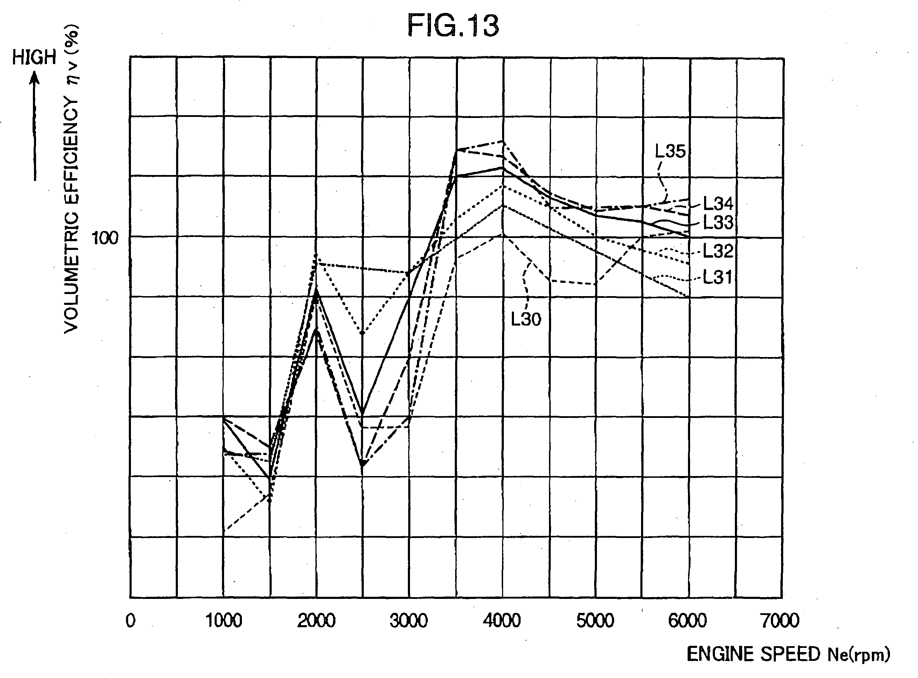

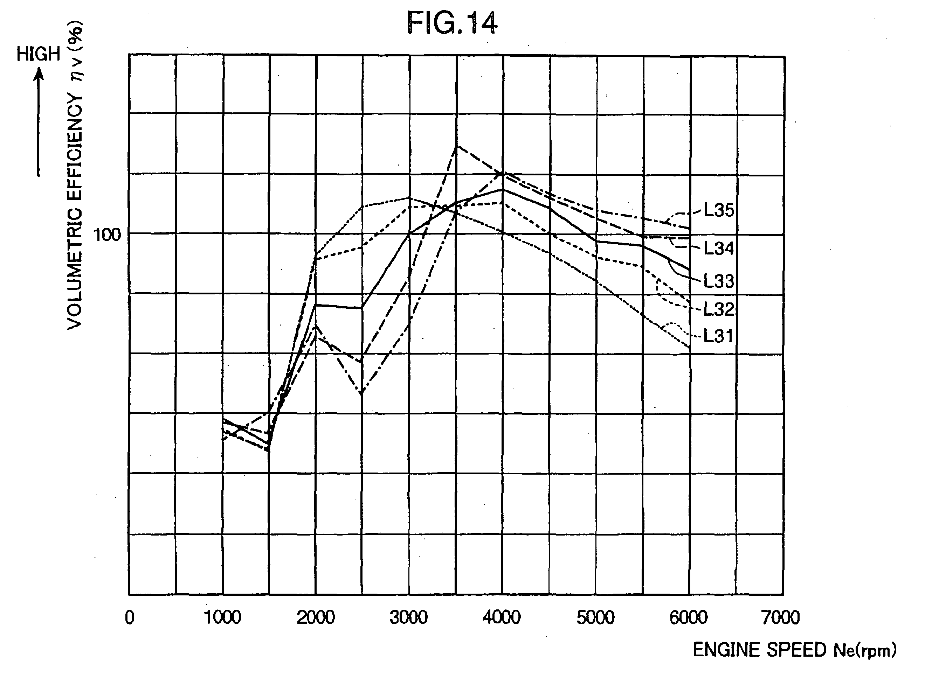

FIG 13 is a graph showing a relationship between a volumetric efficiency and an engine speed in the high-speed engine, and FIG. 14 is a graph showing a relationship between a volumetric efficiency and an engine speed in the low/intermediate-speed engine, wherein the opening/closing timing of the intake valve 19 is adjusted to provide enhanced volumetric efficiency relative to an engine speed.

Referring to these figures, in both measurements using the two types of engines, a volumetric efficiency of 100 % or more was obtained in the engine-speed (Ne) range of 3200 to 4500 rpm.

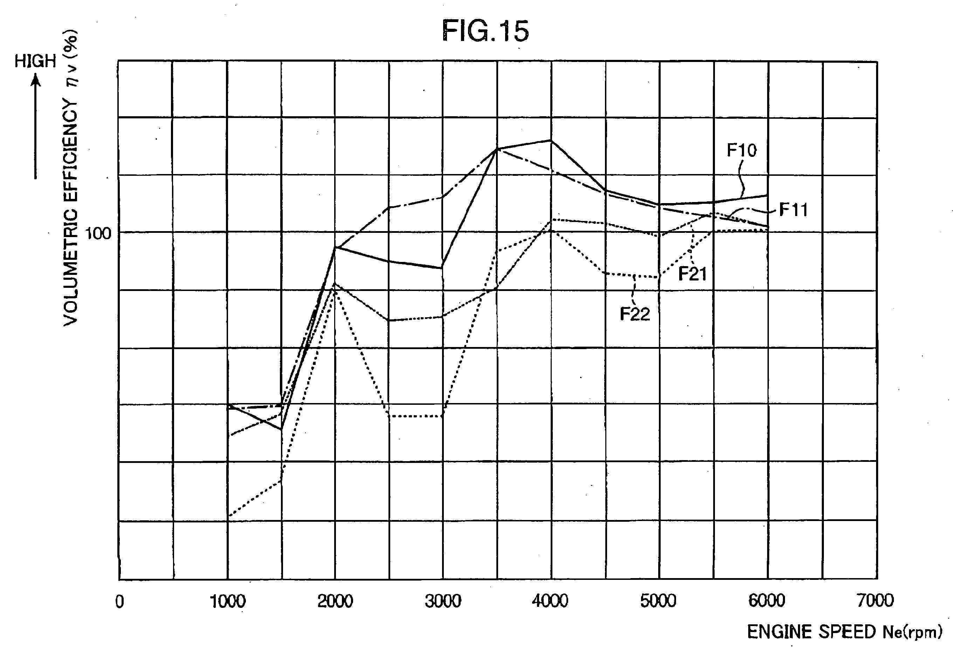

FIG. 15 is a composite graph of peak values at the respective rotary valve open timings L31 to L35 in FIGS. 13 and 14.

In FIG. 15, the lines F10 and F11 indicate peak values of volumetric efficiency, respectively, in the high-speed engine and the low/intermediate-speed engine, and the lines F21 and F22 indicate a volumetric efficiency without the rotary valve, respectively, in the high-speed engine and the low/intermediate-speed engine.

As seen in FIG 15, when the rotary valve is not used, the volumetric efficiency is significantly lowered in the engine speed range of 2000 to 3000 rpm. In contrast, when the rotary valve is used as in the above embodiment, a volumetric efficiency of about 100 % is ensured even in the engine speed range of 2000 to 3000 rpm. Through the above results, it was verified that the intake system according to the above embodiment can provide an excellent volumetric efficiency even in the low/intermediate engine-speed range where the volumetric efficiency is likely to get down.

A relationship between a stroke volume and an independent-intake-passage volume will be described below.

In the course of designing the intake system 40 according to the above embodiment, the inventors carried out a simulation analysis on a relationship between a branch pipe and a stroke volume of a cylinder of an engine having specifications as shown in Table 2.

**Table 2**

| | R1 | R2 | R3 | R4 | R5 | R6 | R7 |
|---|---|---|---|---|---|---|---|
| independent intake passage length (mm) | 150 | 200 | 250 | 300 | 400 | 500 | 600 |
| single-cylinder stroke volume Vh (cc) | 500 | 500 | 500 | 500 | 500 | 500 | 500 |
| independent-intake-passage/stroke-volume ratio (V/Vh) (%) | 59 | 71 | 84 | 96 | 122 | 147 | 172 |

In Table 2, the independent intake passage length is a sum of respective flow-path lengths of the intake port 17 and the branch pipe 43A (43B, 43C or 43D). Specifically, the independent intake passage length is a length between an open end (downstream end) of the intake port 17 relative to the combustion chamber 5 and the opening 52 (or 53) of the rotary valve 50 (see FIG 2). The stroke volume Vh is a volume of the cylinder 17 from piston TDC to piston BDC, and the independent-intake-passage volume V is a sum of respective volumes of the intake port 17 formed in the cylinder head 12 and the branch pipe 43A (43B, 43C or 43D).

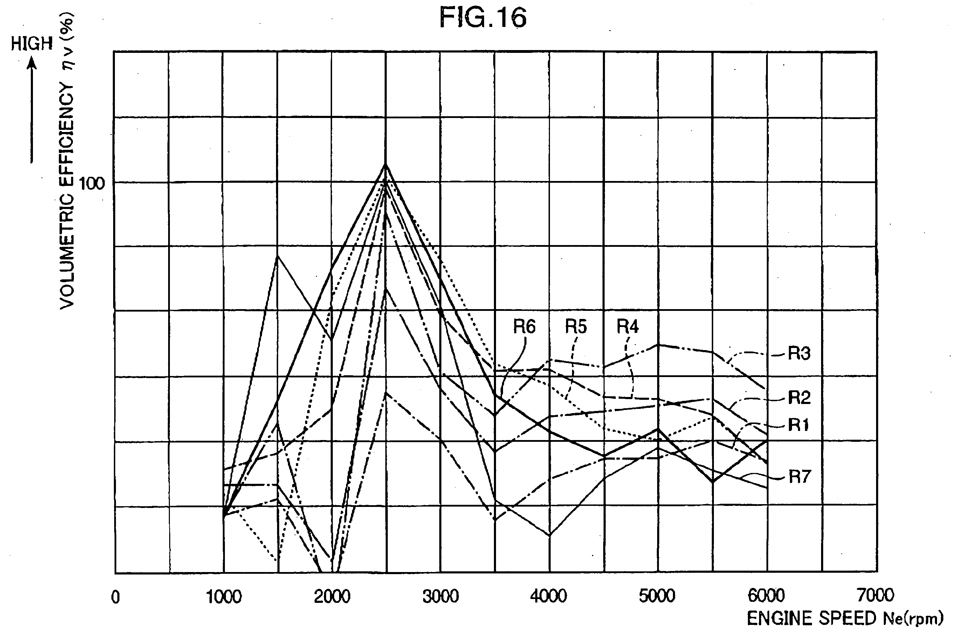

FIG 16 is a graph showing a relationship between a volumetric efficiency ηv and an engine speed Ne in the above specifications.

The measurement result in FIG. 16 shows peak values on the conditions that the intake-valve is open in the range of 50° GA/30° CA to 10° CA/70° CA when the rotary valve is open at 115° CA, on the basis of the specification (R3) where the independent-intake-passage length is set at 200 mm. As shown in FIG. 16, if the independent-intake-passage /stroke-volume ratio falls below 70 %, the volumetric efficiency ηv will be generally lowered as in the line R1 in FIG 16. Particularly, the volumetric efficiency ηv at 3500 rpm is badly lowered. The reason would be that (1) an excessively small independent-intake-passage volume V precludes intake air from being obtained in a sufficient volume, even if the impulse charging function based on the rotary valve is fully utilized, and (2) when a pressure-pulse is generated, peaks of the volumetric efficiency ηv appearing in a low engine-speed range (around 2500 rpm) and a high engine-speed range (4500 to 5500 rpm) undesirably form a valley at 3500 rpm. It was also proven that, if the independent- intake-passage length is greater than the above base length (or if the independent-intake- passage/stroke-volume ratio is 96 % or more), the peak in the high engine-speed range is reduced, and thereby the valley at 3500 rpm is further lowered even if the volumetric efficiency ηv is increased in the low engine-speed range. Moreover, if the independent-intake-passage length is increased, an intake response will be deteriorated, and a torque in a transient state will be likely to be reduced. From this point of view, it was verified that, when the independent-intake- passage/stroke-volume ratio is set in the range between 70 % to 130 % (the independent-intake-passage length is 500 mm or less), a higher torque can be obtained in both steady and transient states, and the response can also be improved.

As described above, according to the above embodiment, the rotary valve 50 designed to be rotatably driven in synchronization with the crankshaft 3 is employed as a portion which acts the valve function of the impulse charging device. Thus, even when the crankshaft 3 is rotated in a high speed range or in a low speed range, a frequency tuning can be reliably achieved to generate a high pressure wave in each of the cylinders 12A to 12D at a desired timing, without undergoing a large intake resistance. This allows even a spark-ignition engine to reliably obtain a power equivalent to diesel engines. In addition, the rotary valve 50 having a diameter larger than a sectional width of each of the branch pipes 43A to 43D is moved to perform an operation for opening and closing each of branch pipes 43A to 43D at a high circumferential velocity, so that a strong pressure wave can be generated.

Further, the independent-intake-passage/stroke-volume ratio is set in the range between 70 % to 130 %. This provides significant effects of being able to efficiently increase a torque not only under a transient state but also under a transient state, such as acceleration, and obtain enhanced volumetric efficiency while reliably achieving the synchronization in low/intermediate/high engine-speed ranges, and low noise even in the low engine-speed range. In addition, the independent-intake-passage/stroke-volume ratio set in the above range makes it possible to reduce the length of the independent intake passage, so that a distance between the fuel injection valve 45 and the cylinder can be reduced to prevent fuel injected from the fuel injection valve 45 from attaching on the inner wall of the intake port before reaching the combustion chamber so as to provide enhanced fuel supply efficiency, synergistically with the function of a pressure wave allowing fuel to be supplied together therewith.

Further, in the above embodiment, the fuel injection valve 45 injects fuel in consideration with a time when the rotary valve 50 is open, specifically just before the pressure pulse is generated to allow the injected fuel to be supplied together with or forcedly charged into the cylinder. Thus, the injected fuel can be efficiently introduced into the cylinder and mixed with fresh air to facilitate formation of adequate air-fuel mixture and cooling of the fresh air based on resulting latent heat of vaporization of the fuel. This makes it possible to suppress attachment of fuel on the inner wall defining the independent intake passage, and obtain an enhanced anti-knocking function based on the latent heat of vaporization, even during combustion at a rich air-fuel ratio in a high engine-load range.

Further, the fuel injection timing can be advanced as the air-fuel ratio becomes richer to satisfy both a fuel vaporization/atomization performance and an anti-knocking performance.

In particular, the intake system according to the above embodiment includes the power transmission means for transmitting a power of the crankshaft 3 of the engine to the rotary valve 50 as a power source thereof. Thus, the rotary valve 50 can be open physically in synchronization with the crankshaft 3 of the engine. This makes it possible to accurately synchronize between respective phases of the rotary valve 50 and each of the cylinders 12A to 12B so as to bring out the pressure-pulse generating function with a higher degree of accuracy to provide more enhanced volumetric efficiency.

The power transmission means in the above embodiment is designed to rotatably drive the rotary valve 50 at a rotational velocity which is one-half of the rotational velocity of the crankshaft 3. Thus, the pressure wave can be propagated to each of the cylinders 12A to 12D while mechanically synchronizing respective opening cycles of the rotary valve 50 and the intake valve 19.

The above capability of propagating the pressure wave to each of the cylinders 12A to 12D while mechanically synchronizing respective opening cycles of the rotary valve 50 and the intake valve 19 can facilitate achieving equalization in length of the independent intake passages.

Further, in the above embodiment, each independent intake passages defined in each of the branch pipes 43A to 43D is set at approximately the same length. Thus, any of the cylinders can obtain the same volumetric efficiency at the same conditions to eliminate variation in torque between the cylinders 12A to 12D and obtain more stable torque production characteristics.

Further, in the above embodiment, the surge tank 42 serving as a collecting portion in fluid communication with the branch pipes 43A to 43D is provided on an upstream side of the branch pipes 43A to 43D, and the rotary valve 50 is disposed inside the surge tank 42 in a concentric arrangement. The operation for opening and closing each of the independent intake passages PH1 to PH4 can be performed inside the surge tank 42 to effectively utilize the volume of the surge tank 42. This makes it possible to increase the diameter of the rotary valve 50 without increase in size of the entire system.

The independent-intake-passage/stroke-volume ratio in the above embodiment has been set in the range between 70 % to 130 %. However, even if the independent-intake-passage /stroke-volume ratio is set at a value departing from the above range, an intake system employing the structure designed to house the rotary valve 50 in the serge tank can instantaneously open each of the branch pipes 43A to 43D at a high circumferential velocity to generate a strong pressure wave so as to efficiently provide enhanced torque not only in a steady state but also in a transient state, such as acceleration. This makes it possible to reliably achieve the synchronization in low/intermediate/high engine-speed ranges and enhanced volumetric efficiency while maintaining low noise even in the low engine-speed range.

Particularly, in the above embodiment, the branch pipes 43A to 43D are respectively, fluidically connected to the four cylinders 12A to 12D, and each flow-path length of the branch pipes 43A to 43D is set at approximately the same value. Thus, any of the cylinders 12A to 12D can obtain the same volumetric efficiency at the same conditions to eliminate variation in torque between the cylinders so as to produce more stable torque..

Further, in the above embodiment, the engine is a four-cylinder four-cycle engine comprising four in-line cylinders 12A to 12D consisting of the 1st to 4th cylinders numbered from one end of the engine in the in-line direction, and the intake stroke is performed in each of the 1st, 3rd, 4th and 2nd cylinders in this order with a phase difference of 180 degrees by crank angle. The rotary valve 50 is designed to be rotatably driven at a rotational velocity which is one-half of the rotational velocity of a crankshaft 3, and formed with the two openings 52 and 53 having a phase difference of 180 degrees or about 180 degrees therebetween in the circumferential direction and a given interval therebetween in the axial direction. The pair of upstream end openings of the branch pipes 43A, 43B for the 1st and 2nd cylinders 12A, 12b are fluidically connected to the surge tank 42 in a mutually displaced manner in the circumferential direction with a phase difference of 90 degrees or about 90 degrees therebetween, and the pair of upstream end openings of the branch pipes 13D, 43C for the 4th and 3rd cylinders 12D, 12C are fluidically connected to the surge tank 42 in a mutually displaced manner in the circumferential direction with a phase difference of 90 degrees or about 90 degrees therebetween. Further, each of the upstream end opening pairs of the branch pipes 43A, 43D for the 1st and 4th cylinders 12A, 12D and of the branch pipes 43B, 43C for the 2nd and 3rd cylinders may be disposed along the circumferential direction of the rotary valve 50 with the same phase.

Thus, the rotary valve 50 having two openings allows a pressure wave to be propagated to each of the branch pipes 43A to 43D of the four cylinders 12A to 12D of the engine at a desired timing so as to provide enhanced volumetric efficiency ηv to obtain a higher torque. This makes it possible to satisfy both enhancement of the torque production characteristic based on the equalization in length, and improvement of the response based on shortening of each of the independent intake passages.

Further, in the above embodiment, in low/intermediate engine-speed ranges, the intake valve is firstly open to perform an intake stroke in the state when the rotary valve 50 is closed, so that a vacuum pressure can be created in each of the cylinders 12A to 12D until the middle of the intake stroke. Then, the rotary valve 50 serving as the portion which acts the valve function of the impulse charging device is open to allow fresh air to be introduced into each of the cylinders 12A to 12D with a high pressure wave. Thus, in the low/intermediate engine-speed ranges, a sufficient volume of air can be introduced into the cylinder on the intake stroke according to the pressure wave generated by the rotary valve 50. Further, in a high engine-speed range, the open timing of the rotary valve 50 is advanced, and the open timing of the intake valve 19 is delayed, so that the open timings of these valves will overlap with one another. This makes it possible to ensure an intake charging term in the high engine-speed range having a high intake flow rate so as to obtain a sufficient volumetric efficiency. Thus, the timing of confining the introduced high pressure wave (fresh air) in each of the cylinders 12A to 12D can be adequate controlled in the process of introducing a high pressure wave into each of the cylinders 12A to 12D using the rotary valve 50, and an intake charging term of the intake valve 19 can be ensured in the high engine-speed range, so as to obtain a high volumetric efficiency over a wide engine-operation range.

Further, in the above embodiment, a volume of each of the independent intake passages between each of the openings 52 and 53 and a corresponding one of the intake pipes 19 is set to provide a natural frequency causing tuning and resonance in the high engine-speed range, and the rotary valve open timing control means 60B controls the valuable valve timing system 21 and the rotary valve 50 to maximize the opening period thereof. Thus, even in the high engine-speed range where the pressure-pulse or impulse function based on the rotary valve 50, a volumetric efficiency can be enhanced based on an inertia supercharging effect to be obtained by the setting of the independent intake passage length.

In addition, the independent-intake-passage/stroke-volume ratio set in the above range makes it possible to reduce the length of the independent intake passage, so that a distance between the fuel injection valve 45 and the cylinder can be reduced to prevent fuel injected from the fuel injection valve 45 from attaching on the inner wall of the intake port before reaching the combustion chamber so as to provide enhanced fuel supply efficiency, synergistically with the function of a pressure wave allowing fuel to be supplied together therewith.

Further, in the above embodiment, the ratio of a volume of each of the independent intake passages between a downstream end of a corresponding one of the intake ports 17 and each of the openings of the rotary valve 43, to a single stroke volume of a corresponding one of the cylinders 12A to 12D, is set in the range between 70 % to 130 % (independent intake passage length: 500 mm or less). This makes it possible to efficiently increase a torque not only under a transient state but also under a transient state, such as acceleration.

Further, in the above embodiment, the surge tank 42 serving as a collecting portion fluidically connected with the branch pipes 43A to 43d is disposed on an upstream side of the branch pipes 43A to 43D along the arranging direction of the cylinders, and the length SL of the surge tank 42 in the arranging direction of the cylinders is set to be less than the edge-to-edge distance LD between respective downside ends of the branch pipes 43A to 43D in the arranging direction of the cylinders. This makes it possible to improve the response of the rotary valve 50 with respect to enhancement of torque.

Further, in the above embodiment, the rotary valve open timing control means 60B is operable, when the engine in a so-called cold stopped state is started, to determine that the engine speed is in a low range, and then control the rotary valve 50 and the valuable valve timing system 21, so that, during startup of the engine, an overlapping zone between respective opening periods of the intake valve 19 and the rotary valve 50 is minimized to allow fresh air to be rapidly introduced into the cylinder on an intake stroke with a high pressure wave at a time when a high negative pressure is created. Thus, an adiabatic compression function in each of the cylinders 12A to 12d is enhanced, and each internal temperature of the cylinders 12A to 12d is increased. This provides enhanced engine starting performance.

Further, in the above embodiment, the valuable valve timing system 21 is designed to be open each of the intake valves 19 with a change of a phase relative to a crank angle. Thus, an intake pressure can be adjusted without modifying each of the intake valves 19 designed to be open and closedd at a full-lift amount. This can facilitate combining the rotary valve 50 with the valuable valve timing system to adequately adjust the intake pressure from the low engine-speed range to the high engine-speed range. Particularly in the high engine-speed range, each valve-opening lift of the intake valves 19 can be set to be full lift. Thus, when the open timing of the rotary valve 50 is advanced to adjust the intake pressure, a high pressure wave to be generated by the rotary valve 50 can be readily adjusted to obtain an appropriate intake pressure.

Further, in the above embodiment, the intake system includes power transmission means (the input pulley 32, 54, the timing belt 34, etc) for transmitting a power of a crankshaft 3 of the engine to the rotary valve 50 as a driving source thereof. The rotary valve 50 can be open physically in synchronization with the crankshaft 3 of the engine.

The above embodiment is just one preferred specific example of the present invention, and the present invention is not limited to this embodiment.

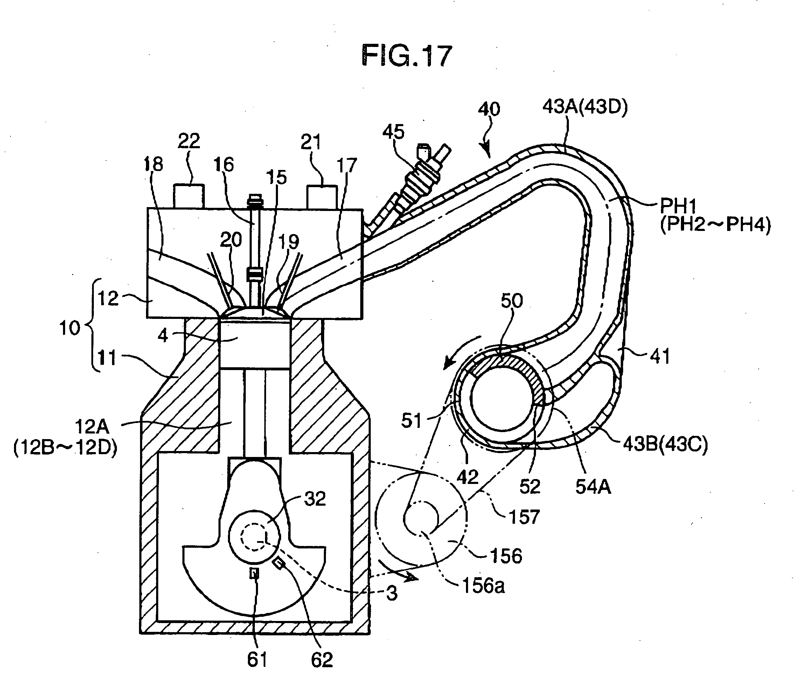

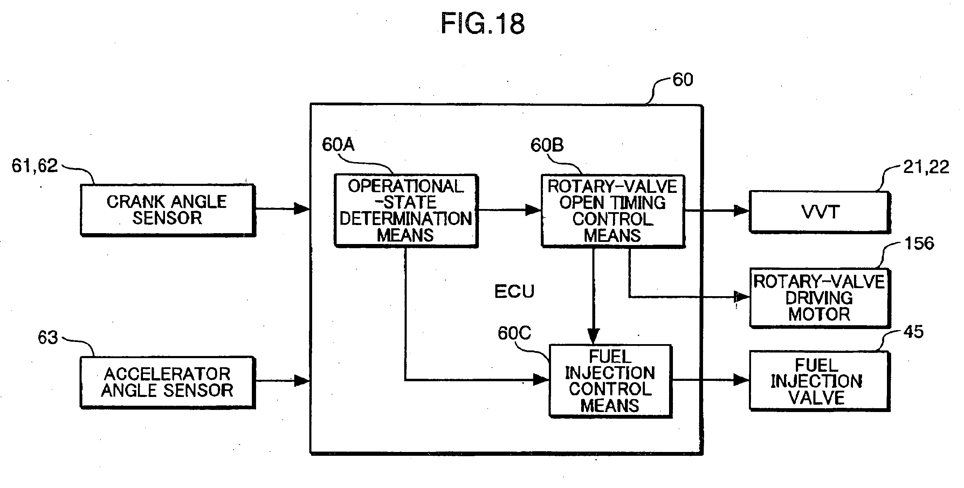

FIG 17 is a schematic sectional view showing a multi-cylinder engine employing an intake system according to another embodiment of the present invention, and FIG 18 is a block diagram showing the configuration of an ECU for the intake system in FIG. 17.

As shown in these figures, an electric motor 156 may be used as a means for driving the aforementioned rotary valve 50. In this case, the rotary valve open timing control means 60B of the ECU 60 may be designed to control a rotational velocity of the electric motor 156 so as to adjust a phase of the rotary valve 50.

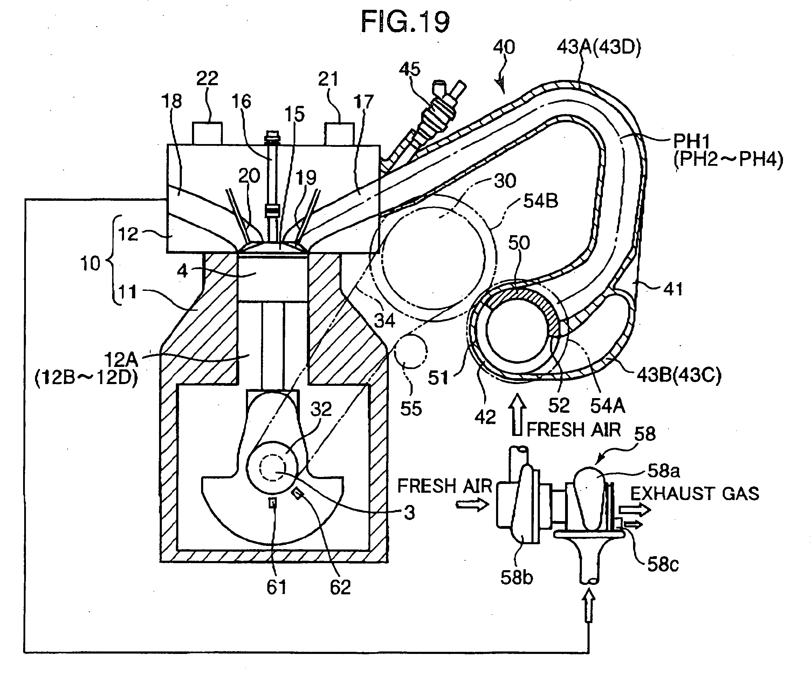

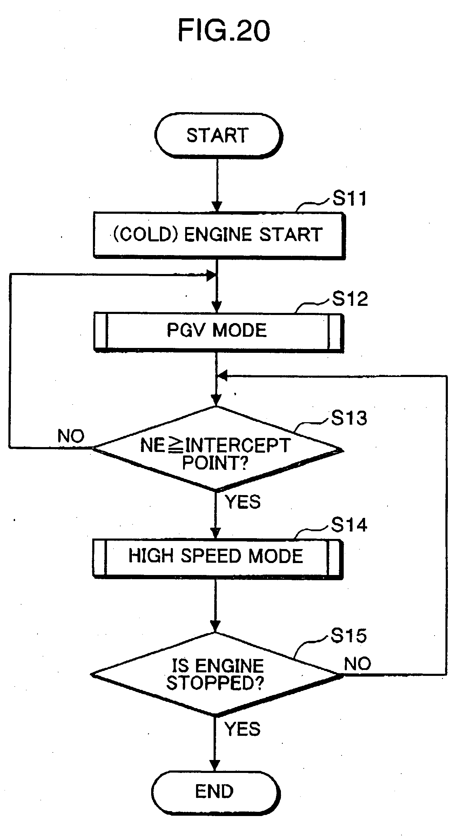

FIG. 19 is a schematic sectional view showing a multi-cylinder engine employing an intake system according to still another embodiment of the present invention, and FIG 20 is a flow chart showing a control process for the intake system in FIG. 19.

The intake system illustrated in FIG. 19 is provided with a turbocharger 58. The turbocharger 58 comprises a turbine section 58a fluidically connected to the exhaust port 18 through an exhaust pipe 18a, and a compressor section 58b driven by the turbine section 58a. A fan housed in the turbine section 58a is rotated by exhaust gas discharged from the exhaust port 18, to allow a fan house in the compressor section 58a to suck outside air and supercharge fresh into a surge tank 42. The turbine section 58a of this turbocharger 58 includes a wastegate 58c having an intercept pint set in an intermediate engine-speed range (e.g. between 2000 and 3000 rpm). The wastegate 58c is operable, when an engine speed is increased beyond to this intermediate engine-speed range, to allow exhaust gas to bypass the turbine section 58a.

Referring to FIG 20, in the embodiment of FIG 19, after the engine is started (Step S11), and each of the aforementioned control means 60A to 60C are shifted to the PGV mode (Step S12), it is whether the engine speed is increased up to the intercept point of the turbocharger 58 or more (Step S13). If the engine speed exceeds the intercept point, the PGV mode is immediately shifted to the high speed mode, and the intercept point will be monitored until stop of the engine (Steps S15, S16). In this embodiment, in the engine-speed range before the engine speed reaches the intercept point of the turbocharger 58, a pressure-wave can be introduced into each of the cylinders 12A to 12D by means of the rotary valve 50. In the intermediate/high engine-speed range after the engine speed reaches the intercept point, the opening periods of the rotary valve 50 and each of the intake valves 10 are overlapped with one another to prevent the occurrence of an excessive differential pressure so as to allow fresh air to be introduced into each of the cylinders 12A to 12D at an appropriate intake pressure. This makes it possible to cover an intake volume in the low engine-speed range by the rotary valve 50, and to effectively bring out the supercharging effect of the turbocharger when a charging pressure reaches the intercept point, so as to provide enhanced charging efficiency.

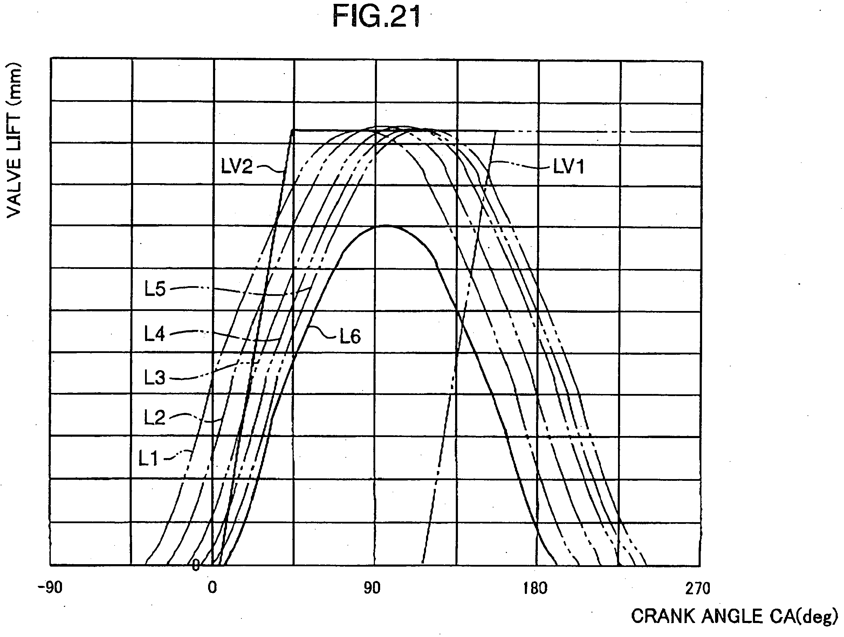

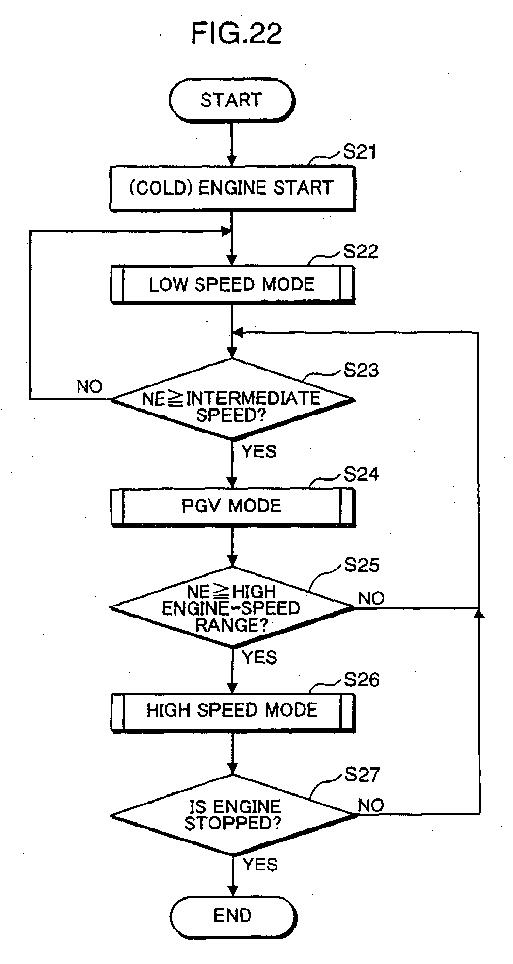

FIG 21 is a graph showing a relationship between a valve lift amount and a crank angle in a multi-cylinder engine employing an intake system according to yet another embodiment of the present invention, and FIG. 22 is a flow chart showing a control process for the intake system in FIG 21.

Referring to these figures, a valve-open timing changing mechanism employed in this embodiment is designed to additionally adjust a valve lift amount (valve opening period). Specifically, in a low engine-speed range, each of the intake valves is open and closed at a low lift (short valve opening period) as indicated by the curve L6 in FIG 21 to obtain a boost pressure. That is, as with the control mode illustrated in FIG. 6, when the valve-open timing changing mechanism is designed to be open and closed the intake valve at a high lift in an intermediate/high engine-speed range, as indicated by L1 to L5 in FIG 21, the operation of the rotary valve in the low engine-speed range is likely to cause increase in time for obtaining a sufficient charging efficient. Thus, as shown in FIG 22, when the valve-open timing changing mechanism is designed to be open and closed each of the intake valves at a low lift in a low engine-speed range to obtain a boost pressure, the engine is started (Step S21), and then each of the control means are set at a low speed mode (Step S22). According to this low speed mode, in an engine-speed range where a valve lift amount is set to be low, the open timing of the rotary valve 60 is controlled to have the curve LV2 in FIG. 21 so as to synchronize with an open timing of each of the intake valve 19 to allow a boost pressure to be obtained only by adjustment of the valve lift amount. Then, as with the control mode as described in connection with FIG 7, when the engine-speed range is shifted to an intermediate engine-speed range or higher, the control mode of the control means 60A to 60C is shifted to the PGV mode or the high speed mode (Steps S23 to S27).

According to this embodiment, in the low engine-speed range requiring high followability with respect to engine load, each of the intake valves 19 can be open and closed at a low lift amount to quickly supply high-pressure fresh air into each of the cylinders 12A to 12D in a short period of time. In the intermediate engine-speed range, the intake valve 19 can be changed in phase, and open/closed at a high lift amount so as to suppress a high pressure wave to be generated by the rotary valve 50. Further, in the high engine-speed range where a sufficient volume of intake air can be ensured, the opening period of the intake valve and the opening period of the rotary valve 50 can be overlapped to prevent an intake pressure from being excessively increased. The fuel injection valves 45 may be, but not specifically shown, attached to the intake ports 17 formed in the cylinder head 12.

Although the present invention has been fully described by way of example with reference to the accompanying drawings, it is understood that various changes and modifications will be apparent to those skilled in the art. Therefore, unless otherwise such changes and modifications depart from the scope of the present invention hereinafter defined, they should be construed as being includes therein.

## Claims

1. An intake system for a multi-cylinder engine, including: independent intake passages, each defined in an intake pipe, which supply air to a corresponding one of cylinders of the multi-cylinder engine, and an intake port disposed on a down stream side of the intake pipe; and intake valves each adapted to be open and closed a corresponding one of the intake ports in the independent intake passages, the intake system being,
**characterized in that** :
a valuable valve timing system is adapted to change an open timing of each of the intake valves; an impulse charging device is adapted to have a valve function in association with an intake stroke in each of the cylinders and at least during a term from the middle of an intake stroke to a compression stroke in the multi-cylinder engine so as to generate a high pressure wave in each of the cylinders; engine-speed detection means detects an engine speed of the multi-cylinder engine; and valve timing control means is operable to control an open timing of the impulse charging device and a valve-open timing of the valuable valve timing system, in accordance with a detection value of the engine-speed detection means, in such a manner as to advance the open timing of the impulse charging device and delay the open timing of each of the intake valves, when the multi-cylinder engine is operated in an higher engine-speed range.

2. The intake system as defined in claim 1,
**characterized in that**: each of the independent intake passages is designed such that a volume thereof between a portion which acts the valve function of the impulse charging device and a corresponding one of the intake valves provides a natural frequency causing tuning and resonance in a high engine-speed range; and the valve timing control means is operable to control the impulse charging device and the valuable valve timing system in such a manner as to maximize a term during which the impulse charging device and the intake valve are concurrently open, in the high engine-speed range.

3. The intake system as defined in claim 1 or 2,
**characterized in that** a ratio of a volume of each of the independent intake passages between a downstream end of a corresponding one of the intake ports and a portion which acts the valve function of the impulse charging device is set in the range between 70 % to 130 % of a single stroke volume of a corresponding one of the cylinders.

4. The intake system-as-defined in either one of claims 1 to 3,
**characterized in that** the impulse charging device includes a rotary valve which so designed as to acts the valve function by rotating in synchronization with a crankshaft of the multi-cylinder engine, the rotary valve has a diameter larger than a sectional width of each of the intake pipes, and a peripheral wall is formed in an opening, wherein each of the intake pipes has an upstream end disposed to face the opening of the rotary valve so as to be selectively open and closed by the rotary valve.

5. The intake system as defined in claim 4,
**characterized in that** the multi-cylinder engine is a multi-cylinder four-cycle engine where one power cycle consisting of intake, compression, expansion and exhaust strokes is produced by two reciprocating motions of a piston, wherein the intake system includes power transmission means for transmitting a power of a crankshaft of the four-cycle engine to the rotary valve as a driving source thereof, the power transmission means being designed to rotatably drive the rotary valve at a rotational velocity which is one-half of the rotational velocity of the crankshaft.

6. The intake system as defined in either one of claims 1 to 5,
**characterized in that** a valuable valve timing system is adapted to change an open timing of each of the intake valves; a rotary valve serving as a valve of the impulse charging device is adapted to be open in association with an intake stroke in each of the cylinders and at least during a term from the middle of an intake stroke to a compression stroke in the multi-cylinder engine so as to generate a high pressure wave in each of the cylinders; and a hollow cylindrical-shaped collecting portion is disposed at respective upstream ends of the intake pipes and fluidically connected with the intake pipes, wherein the rotary valve is disposed inside the collecting portion in a concentric arrangement, the rotary valve has a diameter larger than a sectional width of each of the intake pipes, and a peripheral wall formed in an opening, each of the intake pipes has an upstream end which is fluidically connected to the collecting portion in such a manner as to be disposed to face the opening of the rotary valve so as to be selectively open and closed by the rotary valve.

7. The intake system as defined in claim 6,
**characterized in that** each of flow paths between the respective intake ports and the opening of the rotary valve is set at approximately the same length.

8. The intake system as defined in claim 6 or 7,
**characterized in that** the multi-cylinder engine is a four-cylinder four-cycle engine comprising four in-line cylinders consisting of first to fourth cylinders numbered from one end of the engine in the in-line direction, wherein the intake stroke is performed in each of the first, third, fourth and second cylinders in this order with a phase difference of 180 degrees by crank angle, wherein a pair of upstream end openings of the intake pipes for the first and second cylinders are fluidically connected to the collecting portion in a mutually displaced manner in the circumferential direction of the rotary valve with a phase difference of 90 degrees or about 90 degrees therebetween, a pair of upstream end openings of the intake pipes for the fourth and third cylinders are fluidically connected to the collecting portion in a mutually displaced manner in the circumferential direction of the rotary valve with a phase difference of 90 degrees or about 90 degrees therebetween, each of the pairs of upstream end openings of the intake pipes for the first and fourth cylinders and for the second and third cylinders are so disposed as to juxtapose to each other with the same phase in the circumferential direction of the rotary valve, and the rotary valve is designed to be rotatably driven at a rotational velocity which is one-half of the rotational velocity of a crankshaft of the engine, and formed in a pair of the openings having a phase difference of 180 degrees or about 180 degrees therebetween in the circumferential direction, so as to be open the respective upstream end openings of the intake pipes for the first to fourth cylinders in the order of the intake stroke.

9. The intake system as defined in either one of claims 1 to 8,
**characterized in that** the valve timing control means is operable, when the multi-cylinder engine in a stopped state is started, to determine that the engine speed is in a low range, and then control the impulse charging device and the valuable valve timing system.

10. The intake system as defined in either one of claims 1 to 9,
**characterized in that** the multi-cylinder engine includes a turbocharger having an intercept point at an intermediate engine-speed range, wherein the valve timing control means is operable to control the impulse charging device and the valuable valve timing system in such a manner as to maximize a term during which the impulse charging device and each of the intake valves are concurrently open in an engine-speed range higher than the intercept point of the turbocharger.

11. The intake system as defined in either one of claims 1 to 10,
**characterized in that** the valuable valve timing system is designed to be open each of the intake valves with a change of a phase relative to a crank angle.

12. The intake system as defined in either one of claims 1 to 11,
**characterized in that** power transmission means transmits a power of a crankshaft of the multi-cycle engine to the impulse charging device as a driving source thereof.

13. The intake system as defined in either one of claims 1 to 12,
**characterized in that** the impulse charging device includes an electric motor serving as a driving source thereof.

14. The intake system as defined in either one of claims 1 to 13,
**characterized in that** a valuable valve timing system is adapted to change an open timing of each of the intake valves; an impulse charging device is adapted to have a valve function in association with an intake stroke in each of the cylinders and at least during a term from the middle of an intake stroke to a compression stroke in the multi-cylinder engine so as to generate a high pressure wave in each of the cylinders; engine-speed detection means detects an engine speed of the multi-cylinder engine; and the valuable valve timing system is operable to allow the intake valve to have a relatively low lift and a relatively high lift, respectively, in a low engine-speed range and in intermediate and high engine speed ranges; wherein the valve timing control means is operable to control an open timing of the impulse charging device and a valve-open timing of the valuable valve timing system, in accordance with a detection value of the engine-speed detection means, in such a manner as to advance the open timing of the impulse charging device and delay the open timing of the intake-valve, when the engine speed in an intermediate engine-speed range of the multi-cylinder engine becomes higher, and to maximize a term during which the impulse charging device and the intake valve are concurrently open, in low and high engine-speed ranges.
